(19) Europäisches Patentamt
European Patent Office
Office européen des brevets

(11) **EP 4 318 276 A1**

(12) **EUROPEAN PATENT APPLICATION**

(43) Date of publication:
**07.02.2024 Bulletin 2024/06**

(21) Application number: **22185178.5**

(22) Date of filing: **15.07.2022**

(51) International Patent Classification (IPC):
**G06F 17/16** (2006.01)     **G06N 3/00** (2023.01)

(52) Cooperative Patent Classification (CPC):
**G06F 17/16; G06N 3/0464; G06N 3/0495;
G06N 3/063**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Friedrich-Alexander-Universität
Erlangen-Nürnberg
91054 Erlangen (DE)**
• **Brandenburgische Technische Universität
Cottbus-Senftenberg
03046 Cottbus (DE)**

(72) Inventors:
• **MÜLLER, Ralf R.
91054 Erlangen (DE)**
• **ROSENBERGER, Hans
91054 Erlangen (DE)**
• **REICHENBACH, Marc
03046 Cottbus (DE)**

(74) Representative: **Zimmermann, Tankred Klaus
Schoppe, Zimmermann, Stöckeler
Zinkler, Schenk & Partner mbB
Patentanwälte
Radlkoferstrasse 2
81373 München (DE)**

(54) **APPARATUS AND METHOD FOR COMPUTING A MATRIX VECTOR PRODUCT OF A CERTAIN MATRIX AND A VECTOR**

(57)     An apparatus for computing a matrix vector product of a given matrix and an arbitrary vector is described. The given matrix is represented by S submatrices, with S≥1, with each submatrix representing a vertical slice of the given matrix, and with each submatrix approximated by the product of P further matrices, with P≥1. Each further matrix is a sparse matrix and includes in each row a certain number of elements unequal to zero. The apparatus comprises S processing chains, wherein each processing chain is to receive the arbitrary vector and comprises P processing blocks. Each processing block is to multiply a block input vector and an associated further matrix by shifting the elements of the block input vector according to the values of the elements in the associated further matrix which are unequal to zero, and by combining the shifted elements of the block input vector to obtain respective elements of a block output vector.

Fig. 5

EP 4 318 276 A1

## Description

The present invention concerns the field of signal processing and signal processing systems for processing data vectors by multiplying the data vector with a matrix to obtain output data. Embodiments relate to approaches for calculating a matrix vector product in an artificial neural network. Embodiments of the present invention relate to a resource efficient matrix vector multiplication on hardware, like on a fixed hardware or on a reconfigurable or programmable hardware.

Artificial Neuronal Networks (ANNs) are widely used today in different application fields such as image processing (see references [1] - [4]), speech recognition (see references [5] - [7]) or predictive maintenance (see references [8] - [9]).

*Hardware Architectures*

One of the main drivers of deep learning is the vast amount of computational resources that Graphics Processing Units (GPUs) may provide to train and evaluate sufficiently powerful neural networks. However, with the widespread usage of deep learning and the expansion to further domains like automotive, mobile, and edge devices, additional factors like energy efficiency, latency, and runtime predictability became more urgent. For this reason, a substantial amount of research has been done regarding the acceleration of neural networks with specialized hardware in the last years (see reference [13]). Three main directions of optimization may be identified, which are not mutually exclusive, but are often combined for even greater benefits.

The first category is the design of data-driven digital circuits and its automation. While GPUs with their Single Instruction, Multiple Threads (SIMT) style architecture offer many computational units with less control logic than Central Processing Units (CPUs), they are still fully programmable. Hence, they inherently have a considerable amount of overhead, which is not needed for the smaller subset of operations in deep learning. Therefore, specialized dataflow architectures are of interest. One of the first candidates for this purpose were systolic arrays, which were already concisely described in 1978 (see reference [14]). Their locally connected structure of processing elements not only reduces the needed control hardware, but also increases the amount of local data movement. As a consequence of the fewer slow external memory accesses, this approach also mitigates the widening processor-memory gap, which has the potential to considerably improve performance and energy consumption. Due to these benefits, the concept has been used in many current designs and most prominently in Google's Tensor Processing Unit (TPU) (see references [15] - [17]). For the same reasons, dataflow processing schemes have been similarly applied in varying scales to other architectures (see reference [18]). On a small scale GPUs nowadays also incorporate specialized cores that efficiently process $4 \times 4$ matrix-matrix multiplications (see reference [19]). Furthermore, coarse-grained reconfigurable arrays (CGRA) have been employed as a trade-off between programmability and efficiency (see references [20] - [21]). Hereby, the programmable processing cores directly source data from and provide data to other nearby cores via a routing fabric to keep data as local as possible. In the other extreme, several approaches propose to entirely forgo control flow and generate dedicated accelerators for specific networks (see references [10], [22]). These architectures usually map layers or the complete model to own hardware for the highest efficiency at the cost of flexibility. While automation frameworks for all kinds of deep learning accelerators are nowadays indispensable, in particular these latter types make heavy use of network metadata like the number ranges of input, intermediate, and output values or the composition of the weights matrices (see references [23], [24]).

The second category is the optimization at the network level. Due to the direct influence of the network structure on the efficiency of the accelerator circuits, optimizations usually already begin at the network itself. In this second category of optimization two main approaches emerged. First, the quantization of weights and data from 32 bit floating point to a fixed point representation with a smaller bit width (see references [25], [26]). This method has two benefits. It reduces the complexity of arithmetic operations while at the same time decreasing the amount of memory needed for weights. Therefore, a single operation is not only more memory efficient, but more may be calculated at once with the same memory bandwidth. As smaller bit widths may also be found in other application domains, traditional architectures of CPUs and GPUs already incorporate vector processing capabilities. However, these are usually limited to fixed sizes of 8 bit, 16 bit, 32 bit and 64 bit. Despite the recent support of further operand types like int4 and bfloat16, the optimal values may heavily vary between neural networks and often do not coincide with these fixed widths. Therefore, several approaches use hardware that is specifically adapted for the applications by quantizing the network as far as ternary or binary weights (see references [10], [22], [24]). In addition to the quantization, pruning has been established as the second way to prepare a network for optimized hardware (see reference [27]). Here, weights are successively set to zero and then stored in compressed formats. Although this method makes the control flow logic more complex to parse the weight storage, the overall amount of arithmetic operations is drastically reduced as multiplications and additions with 0 may be completely stripped away. This leads to a sparse matrix multiplication, which may be calculated faster and with less energy than the original matrix multiplication (see references [28], [29]).

The third category utilizes unconventional or novel circuitry and memory cells. As such, one of the central structures are crossbar arrays, which usually follow the general principle of dataflow architectures. They internally store the network weights and perform analog multiplications and additions as the information medium propagates through them (see references [30] - [32]). A number of different technologies with their own benefits and drawbacks have already been investigated. On the still rather conventional side are designs based on capacitors (see reference [33]) and common nonvolatile memory cells like flash and Silicon-Oxide-Nitride-Oxide-Silicon (SONOS) devices (see reference [34]), which are already used in traditional circuits. Regarding novel components, memristive memory cells have become a field of active research for deep learning (see references [30] - [32], [35]). As non-volatile, electrically alterable resistances, they enable storage and in-memory computing in the same device. Furthermore, they promise a high cell density and simpler fabrication in conjunction with digital logic cells due to the full Complementary Metal-Oxide-Semiconductor (CMOS) compatibility (see references [36]). Aside from the classical data processing with electric circuits, silicon photonics have also been presented as an approach for deep learning (see references [37], [38]). Due to its unprecedented possible bandwidth, photonic computing systems promise high performance and energy efficiency. However, there is still a long way until these systems are industrially viable outside of the network communication sector (see reference [39]).

*Algorithmic Fundamentals*

From the pioneering work of Strassen (see reference [40]), it is known that matrix multiplication may be performed more efficiently than by the standard method of calculating inner products of rows and columns. However, the Strassen algorithm brings only benefits for matrix ranks in the thousands and beyond. Furthermore, applying Strassen's ideas to ANNs requires buffering the input vectors until an input matrix with sufficiently large rank has been accumulated. Thus, the Strassen algorithm and its further improvements have remained a well-studied subject in theoretical computer science, but not entered algorithm design for matrix-vector multiplication in ANNs.

A higher accuracy of computation, in general, results in higher computational load. Any improvement in the former is thus equivalent to a reduction of the latter.

The common way to represent matrices is to element-wise quantize their entries. The more accurate the quantization of each entry, the more accurate is the whole matrix. The entries are typically quantized by a common signed integer representation. Each additional binary digit halves the average quantization error. This may be improved by Booth's canonically signed digit (CSD) representation (see reference [41]). Each CSD reduces the average root mean-square quantization error by a factor of $\sqrt{28}$ (see reference [12]).

The element-wise representation is simple, but leaves much room for improvement. The Coordinate Rotation Digital Computer (CORDIC) algorithm (see reference [42]) represents $2 \times 2$ matrices as products of $2 \times 2$ matrix factors that only contain signed powers of two and is used to improve the calculation of, e.g., trigonometric functions. Recent work on linear computation coding in reference [11] shows that rectangular matrices are better suited to be decomposed into matrix products than square matrices. Furthermore, the savings grow unboundedly with matrix size. This behavior was first observed for the particular example of the mailman algorithm (see reference [43]). While the latter is too inflexible for practical applications, modern methods of linear computation coding need to work well for matrices of almost any size and aimed accuracy of computation.

Compared to conventional signal processing algorithms, ANNs achieve a high classification quality without manual design of handcrafted algorithms. While these outstanding features enable ANNs to solve even more and more complex problems, the computational effort of such ANNs becomes large and energy intensive. This applies not only for training but also for inference because it is executed every time the ANN is used.

It is noted that the information in the above section is only for enhancing the understanding of the background of the invention and, therefore, it may contain information that does not form prior art that is already known to a person of ordinary skill in the art.

It is an object of the present invention to provide an apparatus and method improving the computing of a matrix vector product of a given matrix and an arbitrary vector.

This object is achieved by an apparatus and a method as defined in the independent claims. Preferred embodiments are defined in the dependent claims.

The present invention provides an apparatus for computing a matrix vector product of a given matrix and an arbitrary vector,

- wherein the given matrix is represented by S submatrices, with S≥1, each submatrix representing a vertical slice of the given matrix, and each submatrix approximated by the product of P further matrices, with P≥1, wherein each further matrix is a sparse matrix and includes in each row a certain number of elements unequal to zero,
- wherein the apparatus comprises S processing chains, wherein each processing chain is to receive the arbitrary vector and comprises P processing blocks, and

- wherein each processing block is to multiply a block input vector and an associated further matrix by shifting the elements of the block input vector according to the values of the elements in the associated further matrix which are unequal to zero, and by combining the shifted elements of the block input vector to obtain respective elements of a block output vector.

In accordance with embodiments,

- some or all rows of the further matrix include a different number of elements unequal to zero, or
- each row each of the further matrix includes the same number E of elements unequal to zero, with $E \geq 1$.

In accordance with embodiments,

- the given matrix is represented by $S>1$ submatrices, and each submatrix is approximated by the product of $P>1$ further sparse matrices, wherein each further sparse matrix includes the $E \geq 1$ elements unequal to zero in each row,
- the apparatus comprises:

  ◦ an input block to receive the arbitrary vector,
  ◦ an output block to output the matrix vector product, and
  ◦ $S>1$ processing chains connected between the input block and the output block, each processing chain comprising $P>1$ serially connected processing blocks, and
  ◦ wherein the output block comprises a combiner for combining the outputs of the $S>1$ processing chains to obtain the matrix vector product.

In accordance with embodiments, each processing chain is to receive only a part of the arbitrary vector, the part of the arbitrary vector corresponding to the vertical slice of the given matrix approximated by the processing chain.
In accordance with embodiments, a first processing block in each processing chain is to receive as the block input vector the arbitrary vector or the part of the arbitrary vector, and each of the second to $P^{th}$ processing blocks is to receive as the block input vector a block output vector of a preceding processing block.
In accordance with embodiments, each of the processing blocks comprises:

- an input to receive the block input vector,
- a shifter device, wherein the shifter device is coupled to the input for receiving the block input vector, and wherein the shifter device is to perform respective shifting operations according to the non-zero matrix elements of the associated further matrix, and
- a combiner device, wherein the combiner device is to combine outputs of the shifter device for obtaining the block output vector.

In accordance with embodiments, the shifter device comprises

- a plurality of hard-wired shifts so as to perform the respective shifting operations according to the non-zero matrix elements of the associated further matrix, or
- a configurable or programmable logic circuit, like a field-programmable gate array, FPGA, the array of programmable logic blocks being programmed so as to perform the respective shifting operations according to the non-zero matrix elements of the associated further matrix, or
- an integrated circuit, like an application specific integrated circuit, ASIC, the integrated circuit being implemented so as to perform the respective shifting operations according to the non-zero matrix elements of the associated further matrix.

In accordance with embodiments, the configurable or programmable logic circuit and/or the integrated circuit comprise:

- one or more processing elements, the processing element comprising:

  ◦ one or more shifter modules, each shifter module receiving elements of the block input vector and respective non-zero entries of the given matrix, and causing the elements of the block input vector to be shifted according to the respective non-zero entries of the given matrix, and
  ◦ one or more adders, and

- a memory for storing the respective block input vectors and the non-zero entries of the given matrix for the processing elements, wherein

  ◦ the memory is to provide the block input vector and the non-zero entries of the given matrix to each processing block at each processing cycle, or
  ◦ the memory comprises a plurality of memory elements, each memory element being associated with a processing element and storing the block input vector and the non-zero entries of the given matrix for the associated processing element.

In accordance with embodiments, the number S of submatrices representing the input matrix, the number P of further matrices approximating each submatrix, and the number E of nonzero elements in each further matrix is determined according to a desired computational effort and accuracy of the calculation of the matrix vector product.

In accordance with embodiments, one or more or all of the 2nd to Pth processing blocks are to receive the block input vector of the preceding processing block as an additional input.

In accordance with embodiments, one or more or all of the 1st to P-1th processing blocks are configured to include into the block output vector the block input vector.

In accordance with embodiments,

- the given matrix is provided by one layer of a convolutional neural network using a plurality of kernels, each kernel providing a part of the given matrix, and
- a dimension of the given matrix is defined by a number of kernels and a size of the kernels.

The present invention provides an artificial neural network, ANN, comprising:

- one or more layers, the layer to calculate at least the equation $a = Wv$,
- wherein the layer comprises the apparatus of any one of the preceding claims with $W$ being the given matrix, $v$ being the arbitrary vector, and $a$ being the matrix vector product provided by the apparatus.

In accordance with embodiments,

- the ANN is a convolutional neural network, CNN,
- the given matrix is provided by one layer of the convolutional neural network using a plurality of kernels, each kernel providing a part of the given matrix, and
- a dimension of the given matrix is defined by a number of kernels and a size of the kernels.

The present invention provides a computer-implemented method for computing a matrix vector product of a given matrix and an arbitrary vector,

- wherein the input matrix is represented by S submatrices, with S≥1, each submatrix representing a vertical slice of the input matrix, and each submatrix approximated by the product of P further matrices, with P≥1, wherein each further matrix is a sparse matrix and includes in each row E a certain number of elements unequal to zero,
- wherein the method comprises processing the arbitrary vector using S processing chains, each processing chain comprising P processing blocks,
- wherein each processing block multiplies a block input vector and an associated further matrix by shifting the elements of the block input vector according to the values of the elements in the associated further matrix which are unequal to zero, and by combining the shifted elements of the block input vector to obtain respective elements of a block output vector.

The present invention provides a non-transitory computer program product comprising a computer readable medium storing instructions which, when executed on a computer, perform the inventive method.

The present invention is based on the finding that for a desired accuracy of the product of a matrix with a column vector, the number of computations may be reduced, if the matrix may be represented by one or more vertical slices and each of the vertical slices is represented by the product of one or more sparse matrices with only a limited number of non-zero values per row which, up to their sign, may be powers of two without significantly compromising the accuracy of computation and, thus, can be easily implemented by shifts and additions without the need for multiplier units that are common in standard implementations.

For products of row vectors with a matrix, all considerations have to be transposed, i.e., slicing must be horizontal instead of vertical. More specifically, when referring to a matrix-vector-product this means that a matrix A is to be multiplied by a vector **x,** i.e., the calculation is **Ax**. On the other hand, a vector-matrix-product means that a row vector **y** is to be multiplied by a matrix **B,** i.e., the calculation is **yB**. However the multiplication **yB** may also be written as $B^Ty^T$ (with T representing the transpose of the matrix **B** and of vector **y)** and the inventive approach is applied to $B^T$, i.e., $B^T$ is represented by one or more vertical slices (meaning that the non-transposed matrix **B** is sliced horizontally or row wise) and each of the vertical slices is represented by the product of one or more sparse matrices as described herein.

Moreover, by decomposing the vertical slice/submatrix of the initial matrix in accordance with various embodiments of the present invention allows for a substantial reduction in the number of operations and the required hardware, like look-up tables for field-programmable gate arrays, FPGAs, or gates for integrated circuits, ICs, compared to an implementation in accordance with conventional approaches. At the same time an accuracy of the calculation is achieved that is comparable to or even better than the accuracy achieved by conventional approaches. Stated differently, an architecture or apparatus for calculating matrix-vector products in accordance with embodiments of the present invention is equally or even more accurate than standard or conventional implementations. Thus, the sparse matrices with a certain number of non-zero elements per row that may actually only be signed powers of two allow for an efficient implementation of the computation without any multiplications, only shifts and additions are required which are more simply implementable in a computer environment, thereby resulting in an improved architecture allowing for a resource efficient matrix vector multiplication.

In accordance with embodiments of the present invention, decomposing the submatrix representing a certain slice of an overall matrix **W** into a plurality of sparse matrices allows for an efficient implementation of the vector matrix calculation in hardware. The implementation may use different techniques, e.g.,

- a fixed hardware, like a fixed or static application-specific integrated circuit, ASIC, which is configured/programmed for calculating the matrix vector product of a certain matrix **W,** or
- a fixed hardware, like an integrated circuit, IC, build for calculating the matrix vector product of the certain matrix **W,** or
- reconfigurable/reprogrammable circuit elements, like field-programmable gate arrays, FPGAs, or flexible or non-static ASICs, which may be configured/programmed according to the varying sparse matrices used for representing the slices of different matrices **W** so that, instead of being bound to a calculation with a fixed or constant matrix, the matrix may actually be changed by an appropriate reconfiguration/reprogramming of the circuit.

When the inventive approach is used to implement ANNs, it is possible to lower computational effort while still achieving similar results from ANN-inference. Hence, embodiments allow for tuning down computational effort and thereby improving hardware efficiency even further. Thus, embodiments of the present invention provide an approach for lowering the computation effort for calculating matrix vector products, e.g., matrix vector products for an ANN inference, utilizing a matrix decomposition by slicing and factorizing a matrix, like the weight matrix in an ANN. The resulting submatrices are sparse with a well-behaved structure and containing only numbers related to a power of two allowing an efficient computer architecture exploiting the structure of the matrices perfectly. Thus, embodiments of the present invention provide a computer-implemented method for lowering the computation effort for ANN inference utilizing a matrix decomposition, by slicing and factorizing weight matrices. Moreover, embodiments provide a hardware architecture including a mapping tool to map these sliced and factorized matrices efficiently to reconfigurable hardware architectures. In comparison to state of the art FPGA implementations, embodiments of the present invention lower hardware resources by a factor of six.

Embodiments of the present invention are now described in further detail with reference to the accompanying drawings:

Fig. 1    illustrates a comparison between a conventional matrix-vector multiplier (at the top) and an architecture in accordance with embodiments of the present invention (at the bottom) on reconfigurable hardware, like an FPGA;

Fig. 2    illustrates a block diagram of an apparatus in accordance with embodiments of the present invention for implementing a resource efficient matrix vector multiplication on a reconfigurable/programmable hardware;

Fig. 3    illustrates a block diagram of an apparatus in accordance with further embodiments of the present invention for implementing a resource efficient matrix vector multiplication on a reconfigurable/programmable hardware;

Fig. 4    illustrates a block diagram of a processing block in accordance with embodiments of the present invention as it may be employed in the apparatus of Fig. 2 and Fig. 3;

Fig. 5    illustrates a further embodiment of an apparatus for approximating a matrix-vector product;

Fig. 6    illustrates an embodiment of an apparatus implementing a matrix-vector product for a CC-matrix as it may be used in the architecture of Fig. 5 for implementing the full matrix-vector product;

Fig. 7    illustrates a table which represents the improvement achieved by embodiments of the inventive approach over naive implementation in terms of hardware costs, like a number of required lookup tables, LUTs, dependent on the number of vertical slices S per matrix, the number P of consecutive products per matrix slice, and the width W of each slice;

Fig. 8    illustrates a table which represents the improvement achieved by embodiments of the inventive approach over naive implementation in terms of hardware costs, like a number of required lookup tables, LUTs, dependent on the sparsity of the matrices approximating the respective vertical slices of the matrix W;

Fig. 9    illustrates a plot visualizing the results presented in the table of Fig. 8 and showing that the improvement in hardware cost of embodiments of the inventive approach ① compared to the naive implementation ② is best in matrices with even 0-1-distributions;

Fig. 10   is an abstract illustration of an embodiment of a pipeline implementation of the apparatus of Fig. 2, Fig. 3 and Fig. 5;

Fig. 11   illustrates a table holding data with compares maximal frequencies for designs for decompositions of a 64 × 64 matrix with uniformly distributed entries and shows that the decomposed matrix of embodiments of the present invention approximates the original matrix up to an error that is similar to a fixed-point 8-bit arithmetic of a naive implementation;

Fig. 12   illustrates a table which represents the improvement achieved by embodiments of the inventive approach over naive implementation in terms of hardware costs, like a number of required lookup tables, LUTs, when implementing the matrix-vector product calculation for each layer of a Deep Learning Recommendation Model for Personalization and Recommendation System, DLRM;

Fig. 13   illustrates an embodiment of basic modules for implementing the inventive approach, wherein Fig. 13(a) illustrates a shift module and Fig. 13(b) illustrates an adder module;

Fig. 14   illustrate embodiments of processing elements, PEs, for implementing processing block using programmable circuitry, wherein Fig. 14(a) illustrates a simple PE, and Fig. 14(b) illustrates a more complex PE 246;

Fig. 15   illustrates embodiments a naive implementation for a matrix-vector multiplication. sequentially providing respective operands from a memory or storage device to a plurality of processing elements;

Fig. 16   illustrates embodiments for implementing required shifts and additions for implementing the inventive approach with an improved the memory access;

Fig. 17   illustrates further embodiments for implementing required shifts and additions for implementing the inventive approach with an improved the memory access;

Fig. 18   illustrates embodiments for implementing inventive approach for a multiplication of two or more matrices;

Fig. 19   illustrates embodiments for implementing inventive approach when large matrices are used;

Fig. 20   illustrates a table showing improvements of the inventive algorithm for convolutional neural networks over the state of the art ($C_{ST}$) as well as the improvement of the LZ version of the inventive method ($C_{LZ}$) over the standard version of the inventive method ($C_{DM}$);

Fig. 21   illustrates a schematic representation of an artificial neural network, ANN, in which the inventive approach may be implemented; and

Fig. 22   illustrates an example of a computer system on which units or modules as well as the steps of the methods described in accordance with the inventive approach may execute.

Embodiments of the present invention are now described in more detail with reference to the accompanying drawings, in which the same or similar elements have the same reference signs assigned. In this description, matrices and vectors are denoted by boldface upper case and boldface lower case letters, respectively. Non-bold indexed letters denote the entries of the respective matrices and vectors in boldface. Design variables are denoted by non-bold upper case letters, and lower case non-bold letters denote indices running from 0 or 1 to the respective upper case letter.

To address the above-described issues with conventional ANNs, in accordance with embodiments of the present invention, an ANN is modified in a pre-defined way on the algorithmic level and an appropriate hardware architecture is employed, thereby providing for a resource efficient matrix vector multiplication on a reconfigurable hardware. To improve or optimize the computation effort in ANNs, their internal structure is to be considered. More specifically, the architecture of an ANN has several layers, and for the inference of an ANN, the equation

$$a = \phi(Wv + b)$$

$$(1)$$

has to be computed for each layer. In this description, $W$ denotes the weight matrix, $v$ the input vector, $a$ the output vector, $b$ the biases, and $\phi$ the so-called activation function. While in current ANNs, the scalar functions $\phi$ involve low computation effort (e.g. by using a Rectified Linear Unit (ReLU),) as they operate element-wise, the matrix-vector multiplication $Wv$ remains computationally intensive.

Embodiments of the present invention provide an improved, computationally less intensive approach optimizing the matrix-vector multiplication $Wv$. More specifically, in accordance with embodiments, the weight matrix $W$ is vertically sliced into S submatrices:

$$W = [W_1 | W_2 | \dots | W_S]$$

$$(2)$$

which are subsequently factorized into P matrix factors (see reference [11]) as

$$W_S \approx F_{S,P} \dots F_{S,1}\, F_{S,0}$$

$$(3)$$

As is described in more detail below, this decomposition, also referred to as computation coding, brings the following advantages:

- The matrices $F_{1,0}$ to $F_{S,P}$ are sparse matrices with a well-defined structure. In this description a sparse matrix or sparse array is a matrix in which the vast majority of elements, e.g., more than half, often more than 90% of the elements, are zero, i.e., the number of zero elements is substantially higher than the number of non-zero elements.
- The matrices $F_{1,0}$ to $F_{S,P}$ only include numbers or elements having certain values, e.g., values represented by a signed power of two.

In accordance with embodiments, the matrices $F_{1,0}$ to $F_{S,P}$ are sparse matrices with exactly two entries per row and all of their entries are signed powers of two. In this description, the matrices $F_{1,0}$ to $F_{S,P}$ are referred to as well-behaved matrices or CC-matrices, the latter referring to the computation coding decomposition algorithm from which they originate. The matrices $F_{1,0}$ to $F_{S,P}$ may also be referred to as further matrices.

In accordance with embodiments, the two signed powers of two per row, may be optimally placed within the same column. This will then result in only a single non-zero entry per row, which then is the sum of two signed power of two. This consideration applies accordingly to cases with more than two signed powers of two per row.

As described in references [11] and [12], a weight matrix may be transformed into a set of CC-matrices. Each of these CC-matrices is well-behaved meaning they feature only two entries per row and all entries are powers of two. When implementing a matrix-vector product architecture, the well-behaved property of the underlying fixed matrix leads to a lower computational effort because no multiplications are needed anymore as they may be replaced by shifts. Moreover, the a priori knowledge of the structure of $F_{1,1}$ to $F_{S,P}$ enables the creation of dedicated hardware circuits, which perfectly utilize this approach. Nevertheless, as shown in Equation (3), the transformation introduces a small error.

It is noted that also without a transformation there is a small error, as one needs to quantize $W$ to a certain bit-width, and in accordance with embodiments, the number P of factors is chosen such that the error is the same as without transformation.

While in references [11] and [12], the idea of the matrix factorization approach is already described, a hardware realization is not given. Furthermore, references [11] and [12] suggested a horizontal decomposition of the weight matrix $W$. Contrary thereto, in accordance with embodiments of the present invention, it has been found that the vertical decomposition proposed in Equation (2) is much better for a hardware realization. In accordance with embodiments, the hardware realization is based on a reconfigurable logic, like field-programmable gate arrays (FPGAs), and, when compared to a conventional standard design flow on FPGAs, embodiments of the present invention proved a hardware architecture that saves up to 80% hardware (HW) resources. Due to the fact, that the weight matrices are created only once for an application, but are reused for every inference, the reconfiguration ability of FPGAs may be employed to be as flexible as possible to address any ANN. Moreover, the internal structure of the decomposed matrices may be perfectly utilized by FPGAs, due to the fact that shift-operations become just wirings on an FPGA, which costs neither additional hardware resources nor energy. In other words, FPGAs are a well suited structure for implementing this kind of algorithm, namely the combination of matrix decomposition utilizing reconfigurable logic. In accordance with other embodiments, for implementing the above algorithm, an appropriately programmed general-purpose computer or a customized hardware, like an application-specific integrated circuit, ASIC, may be used.

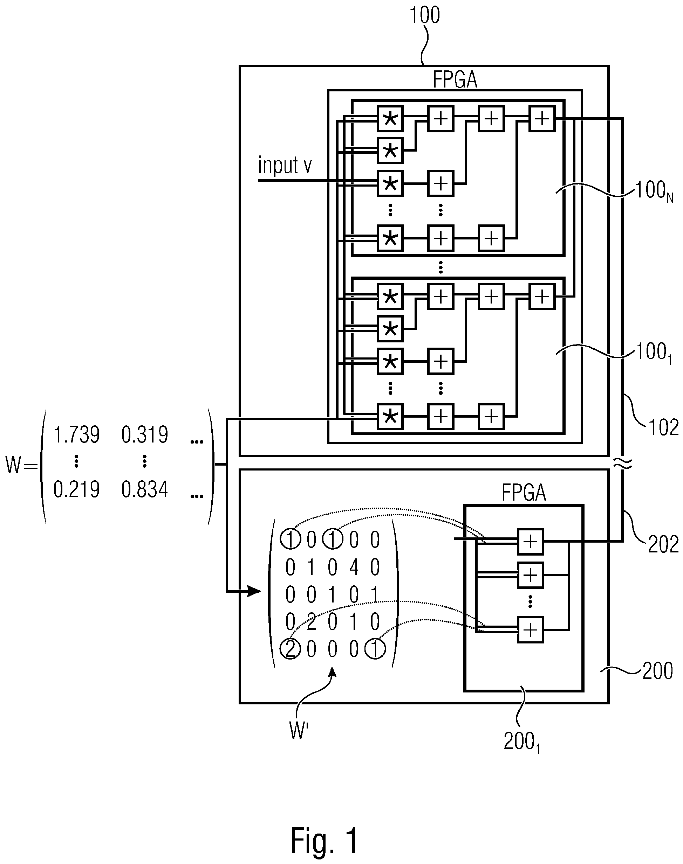

Fig. 1 illustrates a comparison between a conventional matrix-vector multiplier (at the top) and an architecture in accordance with embodiments of the present invention (at the bottom) on reconfigurable hardware, like an FPGA. Fig. 1 illustrates an example of a weight matrix $W$ as it may be provided by a layer of an ANN. The weight matrix $W$ includes, as is shown, a plurality of elements represented by floating point values. In accordance with conventional approaches, a FPGA 100 is provided for implementing a plurality of logic blocks $100_1$ ... $100_N$. Each logic block is configured according to the weight matrix $W$ to perform respective multiplications (*) and additions (+) on respective elements of an input vector $v$ having N elements. The FPGA outputs at 102 the matrix vector product $Wv$. Thus, the conventional approach to a matrix vector product architecture requires many multipliers (*) and adders (+). On the other hand, the approach in accordance with embodiments of the present invention decomposes the weight matrix $W$ as described above yielding the weight matrix $W'$ in Fig. 1 which allows implementing a FPGA 200 with less stages and logic elements to be configured. Actually, as may be seen, only one stage $200_1$ is needed which, further, only needs to implement respective adders (+), no multipliers are required. Thus, contrary to conventional approaches, embodiments of the present invention benefit from the well-behaved structure of the CC-matrices and only require shifters and a fixed small amount of adders. Additionally the linear computation coding approach decomposes the original matrix into multiple CC-matrices, which, due to their unique structure, allow for a resource-aware hardware mapping, which, in turn, results in a limited usage of adders with a short critical path.

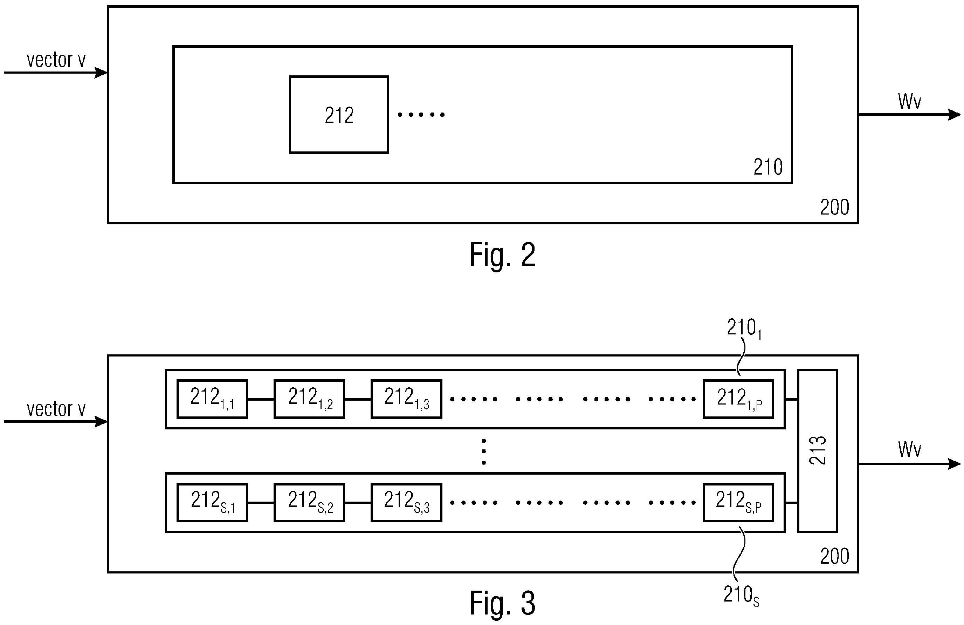

Fig. 2 illustrates a block diagram of an apparatus 200 in accordance with embodiments of the present invention and implementing a resource efficient matrix vector multiplication on a reconfigurable/programmable hardware, like an FPGA, which, as mentioned above, may be configured or programmed so as to define one or more logic blocks implementing the structure of the above referenced one or more CC-matrices by which the matrix $W$ is approximated. The apparatus 200 is provided for computing or calculating a matrix vector product of a certain matrix, like the matrix $W$ and a vector $v$. As mentioned above, the matrix is represented by S submatrices with each submatrix representing a vertical slice of the matrix $W$. In the embodiment depicted in Fig. 2, it is assumed that a sufficiently accurate matrix vector product is obtained by representing the entire matrix by one submatrix, i.e., the matrix and the submatrix are identical. The submatrix, in this embodiment, i.e., the entire matrix $W$, may be approximated by P further matrices with $P \geq 1$. Fig. 2 illustrates an embodiment in which P = 1, i.e., the matrix $W$ is actually approximated by a single further matrix which is a sparse matrix and includes in each row thereof a certain number of elements which are unequal to zero. It is noted that, in accordance with embodiments, all of the rows of the further matrix include the same number of elements being unequal to zero, for example in each row E elements unequal to zero are provided with E being a constant value, like 2, 3 or more. However, in accordance with other embodiments, the number E of elements unequal to zero may be different in different rows so that some or all of the rows may have a different number of elements which are unequal to zero. Dependent on the implementation of the processing blocks, more specifically dependent on how the input matrix $W$ for a slice is decomposed, the number E of elements unequal to zero may be same in each row or may differ from row to row.

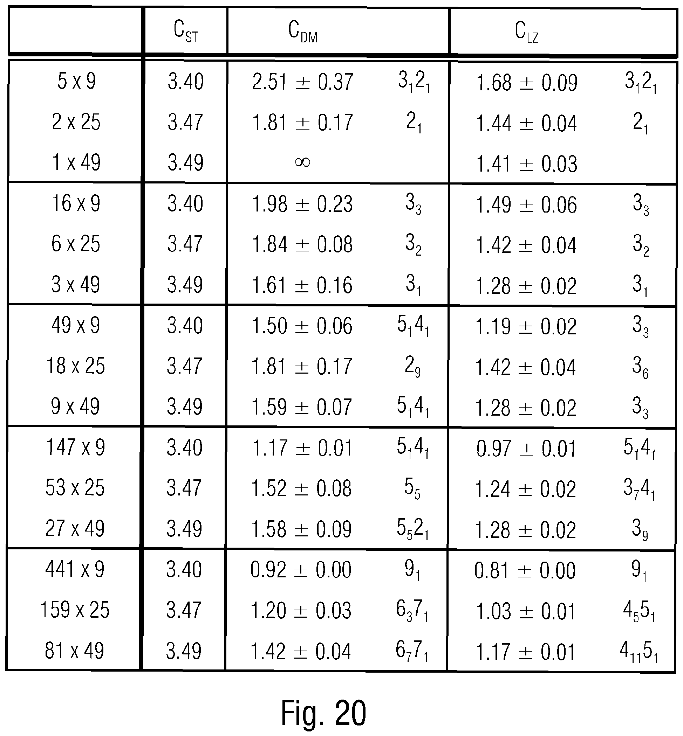

Thus, in the embodiment of Fig. 2, the apparatus 200 comprises only one processing chain 212 which receives the vector $v$ and which comprises one or more processing blocks 212, i.e., at least one processing block. The processing block 212 is to multiply the vector $v$ and the further matrix by which the matrix $W$ is approximated. The further matrix may be one of the above CC-matrices and the properties of such matrices allows performing the multiplication only by implementing a processing block 212 that shifts the non-zero elements of the vector $v$ according to the elements of the further matrix and combines the shifted elements of the vector $v$ to obtain the respective elements of an output vector of the processing block 212. Stated differently, on the basis of the one or more matrices used for approximating at least one submatrix of the matrix $W$, the respective processing blocks are configured, for example by configuring/programming a suitable reconfigurable/programmable logic to obtain the needed shifters/combiners. The embodiment of Fig. 2 may be used for certain matrices $W$ which allow for an approximation by one or more further matrices represented by the respective processing blocks 212 and yielding a result having a desired accuracy. For example, the $441 \times 9$ matrix in Fig. 20 may be represented by a single slice, while the $159 \times 25$ matrix is decomposed into 5 slices with 4 columns and 1 slice with 5 columns.

In accordance with other embodiments, there may be matrices which need to be decomposed further so as to achieve the desired accuracy of the matrix vector product $Wv$, and in such embodiments, the matrix $W$ is divided or cut into two or more, i.e., $S > 1$, vertical slices and each of the slices, defining a submatrix, is represented by one or more further matrices. Fig. 3 illustrates an embodiment of an apparatus 200 for calculating or computing a matrix vector product of a matrix $W$ and a vector $v$, wherein the matrix is represented by S submatrices, and each submatrix is approximated by one or more further matrices, the further matrices having the properties as described above with reference to Fig. 1 and Fig. 2. The apparatus 200 includes S processing chain $210_1$, $210_s$ with each chain including respective processing blocks, more specifically one or more processing blocks 212 ($P$ processing blocks with $P \geq 1$. Each of the processing blocks 212 receives an input vector which, in case of the first processing block of a chain, is the vector $v$ or a part thereof, while the remaining processing blocks, if any, receive as input the output of a preceding processing block. The number of processing blocks and the internal structure thereof depends on the decomposition applied for representing the respective submatrices of the matrix $W$ and, in accordance with the further matrices used for approximating each sub-matrix, the shifting of elements of the input vector to the respective processing block is carried out and the shifted values or elements are combined so as to provide the output vector of the respective processing blocks. As may be seen from Fig. 3, the plurality of processing blocks in each chain 210 are serially connected and, in accordance with embodiments, each processing chain 210 receives either the entire vector $v$ or a part of the vector $v$. Moreover, the apparatus 200 includes a combiner 213 for combining the outputs of the respective processing chain $210_1$ to $210_s$ so as to obtain the matrix vector product $Wv$.

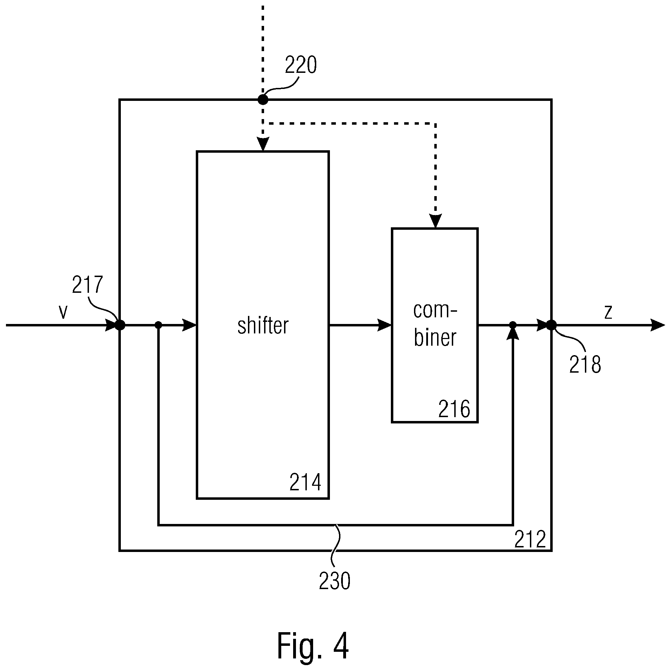

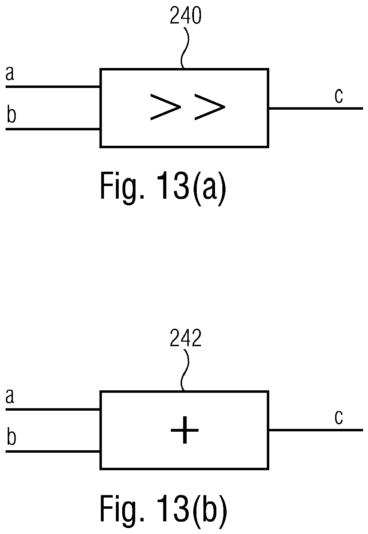

Fig. 4 illustrates an embodiment of a processing block 212 as it may be employed in the architectures of Fig. 2 and Fig. 3 described above. It is noted that Fig. 4 to Fig. 12 refer to embodiments implementing the inventive approach using an appropriately configured/programmed FPGA or static ASIC for operating on static matrices, i.e., the circuitry is for calculating the matrix-vector-product on the basis of a fixed matrix. Starting with Fig. 13 other embodiments are described for implementing the inventive approach using ASICs for operating on non-static matrices, i.e., the circuitry is for calculating the matrix-vector-product on the basis of a matrix that may change.

The processing block may be implemented by a configurable or programmable logic so as to implement a shifter device 214 and a combiner 216. The block 212 may include an input 217 at which a block input vector $v$, for example the vector $v$ in Fig. 2 and Fig. 3 or the output vector of a preceding block, is received, as well as an output 218 for outputting the block output vector z. In case of using configurable/programmable circuit elements for implementing the processing block 212, further, a configuring/programming input 220 may be provided so as to allow applying respective control signals/program signals, as indicated by the dotted arrows, for configuring/programming the respective circuit elements of the processing block 212 so as to define the shifter device 214 or and the shifter device 214 and the combiner 216. The shifter device 214 is coupled to the input 217 for receiving the block input vector $v$ and, by means of the configuration/programming received at input 220, is configured/programmed to perform respective shifting operations according to the non-zero matrix elements of the associated further matrix. The programming/configuring of the respective circuit elements of the processing block 212 is performed in accordance with the structure of the associated further matrix, i.e., the matrix which is one of the P matrices for approximating the submatrix of the given matrix $W$. Stated differently, the programming/configuring of the processing block 212 is performed in accordance with the structure of the further matrix associated with the processing block 212. The output of the shifter device 214 is provided to the combiner 216 for combining the outputs of the shifter device 214 for obtaining the output vector z.

Although the just described embodiments referred to the processing block 212 as being implemented by programmable/configurable logic, it is noted that, in accordance with other embodiments, for example when implementing the inventive apparatus for a certain scenario in which the apparatus is provided for a specific matrix $W$ that does not change, i.e., for a fixed matrix $W$, rather than providing a programmable/configurable implementation, since the operations are only for the same matrix which is decomposed for approximation into further matrices which also do not change, the respective shift operations may be implemented as hard-wired shifts according to the non-zero matrix elements of the further matrix associated with the processing block 212. In such embodiments, the processing block 212 of Fig. 4 may be an ASIC not having the input 220 for applying programming signals/configuration signals. For example, when considering sensors, for some there is a need to be programmable while others may be static. For example a voice sensor needs to be programmable so as to be programmed to the voice of the user, while a sensor for recognizing dogs and sounding an alarm when dogs are present may be hardwired and it is intended to only recognize dogs. Now, the computation coding approach of decomposition of matrices in accordance with embodiments of the present invention is described in more detail.

*Computation Coding - Decomposition of Matrices*

In accordance with embodiments of the present invention, the weight matrix **W** is to be decomposed in such a way that the product **Wv** may be computed using a minimum of hardware resources. The multiplicative decomposition algorithm described in reference [11] works better for rectangular matrices than for square matrices. Therefore, initially the matrix **W** is cut into S sub-matrices $W_s$ as in Equation (2). Similarly, the vector **v** is cut into S sub-vectors $\mathbf{v}_s$ such that $v^\dagger = \left[v_1^\dagger \middle| v_2^\dagger \middle| \ldots \middle| v_S^\dagger\right]$. This yields:

$$Wv = \sum_{s=1}^{S} W_s\, v_s$$

$$(4)$$

Each sub-matrix $W_s$ is decomposed into a product of sparse matrices containing only signed powers of two and zeros. It is noted that in reference [11] the matrix **W** is cut into wide, not tall sub-matrices, however, this may result in a similar number of required computations, but may not be suited for pipelining due to the plurality of paths of different lengths. Each tall sub-matrix $W_s$ is decomposed into P matrix factors $F_{s,P}$ as in Equation (3). For this purpose, for example, the following recursive approach may be used which performs well and allows for a matrix decomposition with a reasonable complexity.

The recursion is initialized with $F_{s,0} = [I|0]^\dagger$ with **I** and **0** denoting the identity and the all-zero matrix, respectively. The sizes of the matrices **I** and **0** are chosen such that $F_{s,0}$ and $W_s$ have the same size. The matrix factor $F_{s,p}$ is calculated using the previous matrix factor $F_{s,p-1}$ and the sub-matrix $W_s$. With M denoting the number of rows in $W_s$, $P > 0$, and some parameter E,

$$f_{s,p,m} = \operatorname*{argmin}_{\varphi\in\{0,\pm 2^z\}^M:\|\varphi\|_0=E} \left\| w_{s,m} - \varphi F_{s,p-1}\ldots F_{s,0}\right\|_2$$

$$(5)$$

is solved row-wise for all rows $f_{s,p,m}$ of $F_{s,p}$, where $w_{s,m}$ and $\|\varphi\|_0$ denote the m-th row of $W_s$ and the number of non-zero components in $\varphi$, respectively. The recursion stops at P factors, if a desired accuracy is reached, i.e. the Frobenius norm of the difference between the approximation and the exact weight matrix is small enough, e.g., is less than a predefined threshold. While the initial factor $F_{s,0}$ is rectangular having the same size as $W_s$, all subsequent factors $F_{s,1}$ to $F_{s,p}$ are square.

The optimization problem (5) is np-hard. Therefore, an approximate solution based on a matching pursuit (see reference [44]) is resorted. The constraint to signed powers of two may be ignored to find the first non-zero entry of the vector $\varphi$. Then, it is quantized to the power of two which gives the smallest Euclidean distance to $w_{s,m}$. Given this quantized entry of $\varphi$, the second entry of $\varphi$ is found based on the matching pursuit and this is also quantized to the signed power of two which gives the overall smallest distance to $w_{s,m}$. This is repeated until E non-zero entries are found.

By design, any matrix factor $F_{s,p}$, $P > 0$ contains exactly E nonzero elements per row. These E non-zero elements are signed powers of two. Multiplying such a matrix to a vector, thus, requires exactly E shifts and E - 1 additions or subtractions per row. For an $M \times N$ weight matrix, the total number of additions and subtractions to compute **Wv** is, thus,

$$(E - 1)MPS + (S - 1)M$$

$$(6)$$

These are $M(E - 1)$ additions or subtractions for any matrix factor $F_{s,p}$. In total, there are $PS$ of these matrix factors. Moreover, there are $(S - 1)M$ additions for calculating the sum in Equation (4).

The choices of the three parameters $P$, $S$, $E$ determine both the computational effort and the accuracy of the approximation of the matrix W according to Equation (3). Setting

$$S \approx N / \log_2 M$$

$$(7)$$

is a suitable choice. The optimum value of $S$ may deviate from Equation (7) by at most a factor of two in one or the other direction. For given parameter $S$, the parameters P and E are chosen such as to reach the desired accuracy of computation.

*Architecture / Hardware Realization*

Now, an architecture and hardware realization on a reconfigurable hardware in accordance with embodiments of the present invention is described in more detail. More specifically, an embodiment of an architecture for CC-matrix-vector products is described, which implements multi-layer perceptrons (MLPs), as a general form of ANNs, on FPGAs. A MLP is a sequence of neural layers, each layer including of a set of neurons with activation functions. The resulting activations of a layer may be computed element-wise or, when represented as a vector, using a matrix-vector product concatenated with a non-linear activation function as shown in Equation (1) above, in which $a$ is the resulting activation of the current layer with weight matrix W, the input vector $\boldsymbol{v}$, the bias b, and the activation function $\phi$. The inputs to a layer are the activations of the previous layer, or in the case of the first layer the input to the MLP itself. Disregarding the activation function, it is immediately obvious that the matrix-vector product is the most computationally expensive component of the presented equation. Thus when designing an optimized MLP architecture it is crucial to focus on said multiplication. The approach of embodiments of the present invention replaces the original matrix-vector product with multiple CC-matrix-vector products, meaning matrix-vector products where the matrix is a CC-matrix, using the above-described approximate matrix decomposition algorithm.

The standard implementation of a matrix-vector multiplication includes two steps, the multiplication itself and the column-wise addition per entry of the result vector. Consider the product

$$W\boldsymbol{v} = \boldsymbol{z}$$

$$(8)$$

where $W \in \mathbb{R}^{M \times N}$, $\boldsymbol{v} \in \mathbb{R}^{N}$, and $\boldsymbol{z} \in \mathbb{R}^{M}$. The computation of Equation (8) begins with an element-wise multiplication step where all columns of $W$ (denoted here as $\boldsymbol{w_n}$) are element-wise multiplied with the vector $\boldsymbol{v}$, i.e., $\boldsymbol{z_n} = \boldsymbol{w_n}\boldsymbol{v}$, resulting in the intermediary matrix $\boldsymbol{Z} \in \mathbb{R}^{M \times N} = \left[\boldsymbol{z_1}|\boldsymbol{z_2}|...|\boldsymbol{z_N}\right]$. Then all columns of $\boldsymbol{Z}$ are accumulated to compute the result $\boldsymbol{z} = \sum_{n=1}^{N} \boldsymbol{z_n}$. As already mentioned, the product according to Equation (8) is to be restricted so as to simplify the hardware required to implement it. Instead of using the original matrix $W$ the above-described approximate matrix decomposition algorithm is applied which results in the approximation of $W$ such that such that $W\boldsymbol{v} \approx \sum_{s=1}^{S} \prod_{p=0}^{P} \boldsymbol{F_{s,p}} \, \boldsymbol{v}$, where $\boldsymbol{F_{s,p}} \in \mathbb{R}^{M \times N}$ for $p > 0$.

There are three parameters that determine the number of matrix-vector products needed to implement this decomposition. The algorithm decomposes W into slices of width $W = \frac{N}{S}$. Thus, with increasing width W the number of slices decreases. The parameters P and E are used to control the accuracy of the approximate decomposition which increases with P and E meaning that more factors and less sparsity in these factors yield a more precise result. In accordance with embodiments, P and E may be set to allow performing similar to the integer-arithmetic used in the standard implementation. Each of the matrices $\boldsymbol{F_{s,p}}$ is a CC-matrix with the following properties that may be controlled by the algorithm:

- There is a fixed number of elements that are unequal to zero in each row of the matrix.
- The domain of values that matrix entries may be is fixed to a finite set.

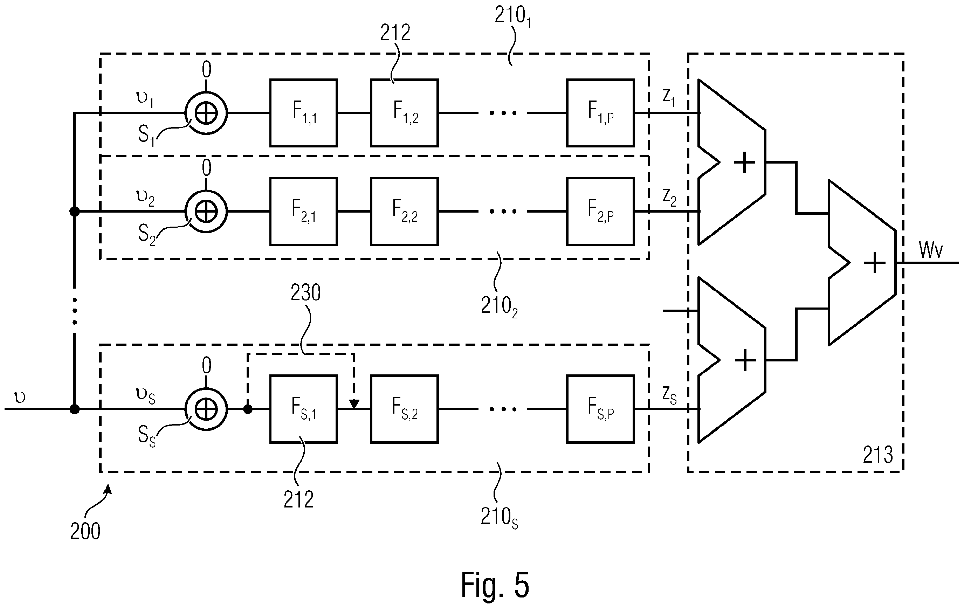

Fig. 5 illustrates an embodiment of an architecture for approximating a matrix-vector product (MVM) $\boldsymbol{Wv}$ = z where $\boldsymbol{W}$ is decomposed into the CC-matrices $\boldsymbol{F_{1,1}}$ to $\boldsymbol{F_{s,p}}$. The input for $\boldsymbol{F_{s,p}}$ is the s-th part of $\boldsymbol{v}$ separated into S

pieces/slices and zeros such that the vector has N elements. After the parallel computation, the partial results $z_s$ are accumulated to z. The architecture 200, as also described above with reference to Fig. 3, is based on a representation of the matrix $W$ that is cut into $S$ vertical slices, and the respective submatrices of the matrix $W$ are decomposed so as to be approximated by the CC-matrices $F_{1,1}$ to $F_{S,P}$ which are used for defining or configuring/programming the respective processing blocks 212 in the respective $S$ processing chain $210_1$ to 210s. The combiner 213 is provided for combining the outputs $z_1$ to $z_S$ from the respective processing chain $210_1$ to 210s and comprises a plurality of adders, like a tree adder structure or the like. Thus, Fig. 5 illustrates an embodiment implementing the full matrix-vector product by assembling multiple instances of an architecture implementing a matrix-vector product for CC-matrices. The architecture may be divided into three parts, providing the input vectors, multiplication with CC-matrices and accumulation of the partial results.

As each row of CC-matrix-vector products only approximates a slice of the original matrix, the first part provides the partial input vectors $v_1...v_S$ for the respective rows to which a corresponding section of the input vector $v$ is to be applied. To match the dimensions of the matrices $F_{s,p} \in \mathbb{R}^{M \times N}$ for $p > 0$, a partial input vector $v_s$ is multiplied with an identity matrix. This is formally done in Equation (3) by the initial matrix factor $F_{s,p}$. In accordance with embodiments, this may be shortened to filling up the remaining bits with zeros, as is illustrated in Fig. 5 by the respective summing nodes $S_1$ to $S_S$ in Fig. 5. The array of CC-matrix-vector products is provided such that each row is implemented as a chain of CC-matrix-vector products running in parallel to other rows. As each row of CC-matrix-vector products only represents a column of the original matrix, the results of a row of CC-matric-vector-products is only a partial result. To get the final output vector all partial results $z_s$ are accumulated. In accordance with embodiments, the accumulation may make use of a binary tree structure as depicted in Fig. 5 or of a linear adder. Compared to a linear addition, a binary tree structure may minimize the critical path length at the cost of more hardware needing to implement it.

Thus, the above described embodiment implements an approximate matrix-vector product architecture, with the approximation being at least as exact as comparable fixed-point arithmetic. The resource efficiency achieved is not at the cost of a lower throughput but comes from restructuring a priori knowledge and may be used to replace a naive implementation of matrix-vector products.

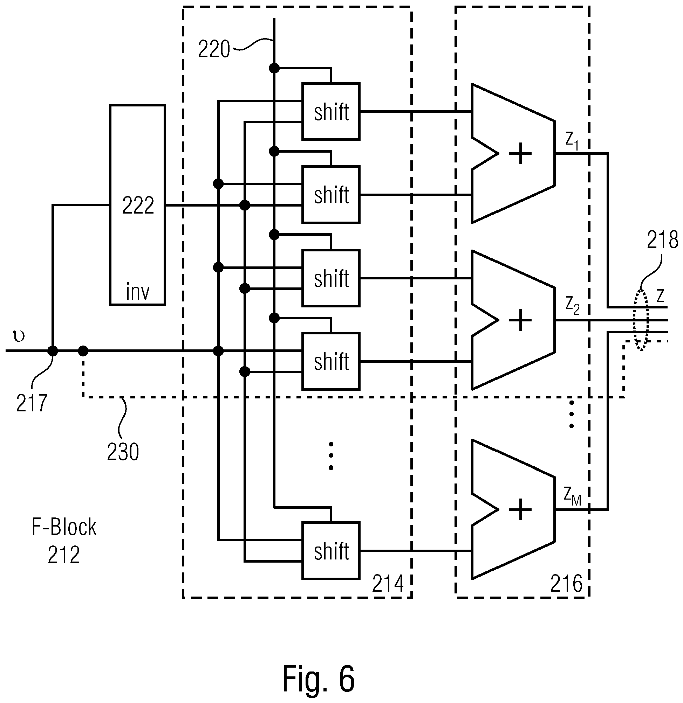

Fig. 6 illustrates an embodiment of an architecture implementing a matrix-vector product for CC-matrices as it may be used in the architecture of Fig. 5 for implementing the full matrix-vector product. Fig. 6 illustrates an embodiment for implementing the respective processing blocks 212 or F-blocks. In Fig. 6, the components of the processing block already described above with reference 4 are indicated, namely the shifting device 214, the combiner 216, the input 217 receiving the block input vector $v$, the output 218 outputting the block output vector z and, in case of a programmable/configurable circuitry used for implementing the block 212, the programming/configuring input 220. In accordance with the depicted embodiment, the shifter device comprises a plurality of shifters, the number of which, in case a programmable/configurable circuitry is used for implementing the block 212, depends on the respective CC-matrix to be implemented by the block 212. The appropriate number of shifters may be configured/programmed via the input 220 on the basis of the CC-. The respective shifters in the shifter device 214 receive the input vector $v$ from input 217 of the block 212 and cause a shifting which is in accordance with the number of non-zero elements in the CC-matrix. The outputs of the respective shifters of the shifter device 216 are applied to the combiner 216 which comprises a plurality of adders for combining the outputs of at least two shifters from the shifter device 214 into the output vector z provided at the output 218.

In the embodiment of Fig. 6, further, an inverter 222 is illustrated for inverting the input signal or vector $v$ so that the inverted signals are applied to the respective shifters. As described below, the inverter 220 may be enabled or provided in case the non-zero elements of the CC matrix are negative values or comprise, among positive values also negative values.

Further, in accordance with other embodiments, when implementing the blocks for a scenario in which the matrix $W$ is fixed, i.e., there is no change in the matrix on the basis of which the matrix-vector-product is to be calculated, the shifting device 214 may be implemented by hard-wired shifters in accordance with the non-zero elements of the CC matrix.

In accordance with embodiments, each row of the matrix $F_{s,p}$ includes exactly two non-zero elements, i.e. E = 2. As each element of the output vector z is calculated as the inner product of two vectors with one of them containing only two non-zero entries, only one addition is needed to compute the m-th component $z_m$. This holds for any of the $M$ components of z, so there are M additions needed. When implementing a general matrix vector product one may choose between a linear adder and a tree adder for effectively choosing between minimizing hardware cost and critical path length. To implement a matrix vector product with the described restriction on E only one adder per matrix row is needed, thereby optimizing both hardware cost and critical path length at the same time.

It is noted that with an increase in E also the number of adders required to accumulate all intermediate results from one row increases. The optimization problem here is between minimizing hardware cost by choosing a linear adder structure or minimizing the critical path by choosing tree adders. While E and thus the hardware cost per CC-matrix product increases immediately, the total hardware cost is balanced by the need of less sequential products. Due to more information being stored in each CC-matrix the number P of matrices required to reach a certain precision decreases. One benefit of embodiments of the inventive approach compared to a naive implementation results from the second point mentioned. By restricting all non-zero matrix entries to be powers of two, there is no need for any multiplication elements when implementing the matrix-vector product. As numbers may be encoded binary, a multiplication with a power of two is nothing but a shift. There are multiple possibilities to implement these shifts. For example, barrel shifters enable shifting in both directions and thus are one way of implementing the required computation. The benefit of this approach is that the implementation is independent of the matrix values as the matrix elements are the controlling the input of the shifters and may be read from memory. In accordance with embodiments, the matrices may be fixed so that no shifters are needed and the shifts may be hard-wired using simple connections between the input vector and the adders.

It is noted that there is no restriction on the matrices to include only positive values. In accordance with embodiments, also negative matrix entries are handled, e.g., by inverting the input vector at the beginning and choosing between the inverted and the original input vector at the time of shifting.

In any case, compared to a naive implementation of a general product, the above described implementation of a CC-matrix-vector product in accordance with embodiments of the present invention has a significantly lower hardware cost and critical path length.

*Scalability*

Now the results of several experiments on the scalability of the above-described architecture are to be presented. There are several factors that affect the scalability of the above-described architecture for a matrix-vector product.

Apart from optimizations to the architecture and the ease of applying them, the effects of variable matrix traits in terms of matrix dimensions as well as the distribution of the matrix entries are now described.

*Matrix dimensions*

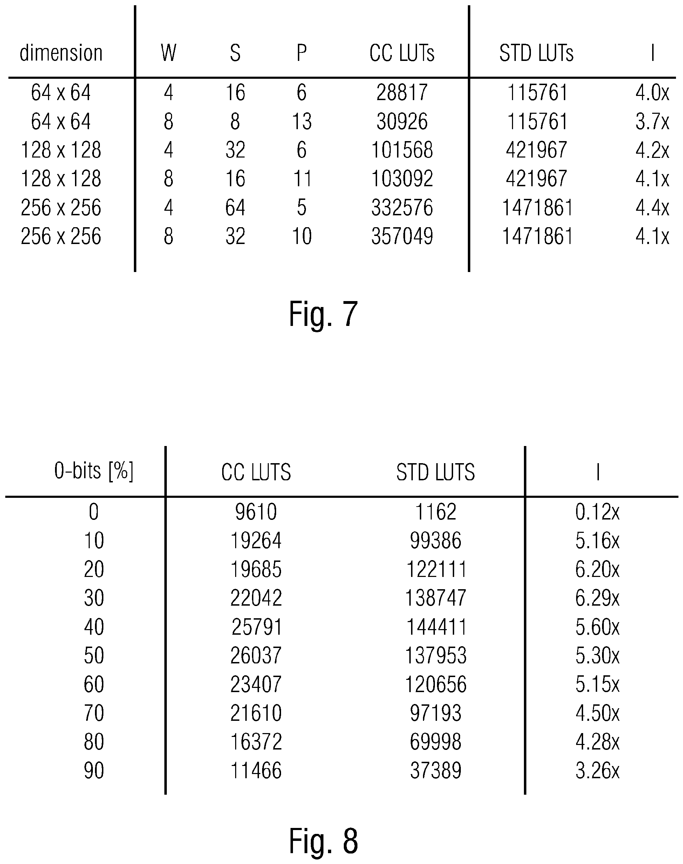

One aspect regarding the performance of the architecture is its scalability in terms when varying matrix dimensions and the corresponding benefit compared to a naive implementation. This facet has been explored in the following experiment. As matrices appearing in ANNs are to be represented, square matrices with dimensions ranging from $64 \times 64$ to $256 \times 256$ are considered. To keep the generality the matrices are randomly generated with a uniform value distribution. At this point the sparsity of matrices is not varied but only the dimensions. The main choices left before running the linear computation coding algorithm is the precision to be achieved and the size of the matrix slices to be approximated. The results are compared to a fixed- integer arithmetic naive implementation of a matrix-vector product with a bit width of 8. The bit width of all vector entries between matrices, meaning the in- and outgoing vectors of the corresponding matrices, is set to 8 bit. This determines the precision to be achieved. In terms of slice size for the decomposition algorithm the results for the bit widths 4 and 8 are given in Fig. 7 illustrating a table in which $S$ is the number of vertical slices per matrix, P is the number of consecutive products per matrix slice, and W is the width of each slice. The standard approach (STD) implements a naive matrix-vector product with fixed-point arithmetic with a bit width of 8. The precision of said bit width is achieved by the computation coding (CC) decomposition resulting in $S$ consecutive products per slice. The column $I = \dfrac{STD\ LUTs}{CC\ LUTs}$ represents the improvement achieved by embodiments of the inventive approach over the naive implementation. More specifically, it is immediately obvious that embodiments of the inventive approach outperforms the standard implementation in every case. The factor by which embodiments of the inventive implementation is better in terms of hardware cost measured in LUTs required for implementation correlates to the dimension of the corresponding matrix. It ranges from 4 for $64 \times 64$ matrices to 4.5 for $256 \times 256$ matrices. Thus, the amount of adders required to implement embodiments of the inventive approach depends on the matrix dimension and the precision to be achieved. A theoretical factor of $\dfrac{1}{2}\log_2 M$ for the benefit in terms of LUT-count may be expected of embodiments of the inventive approach compared to a naive implementation for a $M \times M$ matrix. Further the precise slice size used in the decomposition of the original matrix has a negligible impact compared to scaling the matrix dimension. Also the number of consecutive CC-products to achieve the desired precision increases with the slice size as more values of the original matrix are represented. At the same time with an increasing slice size the number of factors required increases thereby cancelling out the reduced hardware cost stemming from the reduced number of slices. Summarizing the findings, embodiments of the inventive approach outperform a naive implementation of a *M-*by-M-matrix-vector product by an average factor of $\frac{1}{2}\log_2 M$ mainly depending on the dimension M of the matrix.

*Matrix entry distribution*

The previous experiment considered the matrix dimension as variable, however, when implementing the inventive approach in neural nets, the effects of various kinds of matrix entries is also to be considered because it may not be guaranteed that neural nets only produce matrices with uniformly distributed entries. An analytic metric for matrices is provided to determine the pay-off of using embodiments of the inventive approach instead of the naive implementation in terms of complexity. For this, matrices are considered that, when quantized and encoded binary, have a certain ratio of 0-bits compared to 1-bits. Although matrices with a low percentage of 0-bits are not always considered sparse in the traditional sense, this test still is meaningful. This is due to the number of adders in the resulting implementation being the same for canonically sparse matrices and matrices with the same bit ratio with the bits being uniformly distributed. The generation procedure of such matrices starts with a matrix consisting of zeros only and randomly selected 0-bits are continuously flipped until the desired bit ratio is achieved. The dimension of these matrices is set to 64 × 64, and the results are presented in the table illustrated in Fig. 8. The data in this table compares the hardware complexity of a naive implementation of a matrix-vector product compared to the embodiments of the computation coding approach for matrices with varying sparsity. This sparsity is emulated by forcing a certain percentage of 0-bits compared to the overall bit count of the binary encoding of all matrix entries. Each matrix has the dimension 64 × 64 and is encoded in 8-bit to compute the metric. The factor $I = \frac{STD\ LUTs}{CC\ LUTs}$ is the improvement of embodiments of the computation coding approach over the naive implementation.

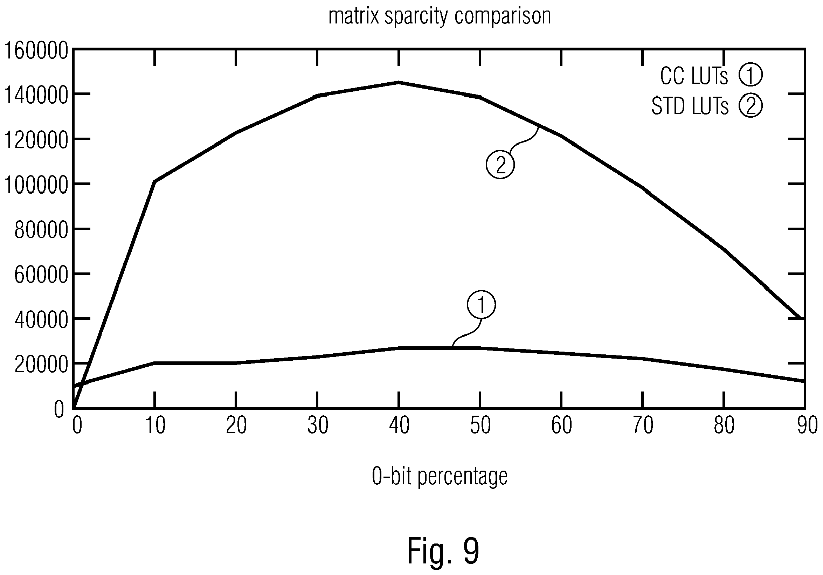

The vector-entry bit width is set to 8 bit. This setup allows the emulation of random matrices with a certain sparsity. The metric allows for an easy analytical computation meaning that it acts as a measure of pay-off of using embodiments of the inventive approach compared to a naive architecture. As expected the implementation of a sparse matrix is not as expensive as that for a non-sparse matrix which is true for both the naive approach being marked as STD in the table in Fig. 8 as well as for embodiments of the inventive architecture. These results are graphically presented in Fig. 9 illustrating a plot visualizing the results presented in the table of Fig. 8 and showing that the improvement in hardware cost of embodiments of the inventive approach ① compared to the naive implementation ② is best in matrices with even 0-1-distributions. Further, Fig. 9 illustrates that embodiments ① of the inventive approach are better by a factor of 3 to 5 compared to the naive implementation ②.

Thus, summarizing the above findings, one may see that using embodiments of the inventive approach compared to a naive implementation increases with decreasing sparsity of the underlying matrices but is generally better by a factor of at least 3 for matrices that are not made up of only zero or one bits.

*Pipelining*

Now applying embodiments of the inventive approach to pipelining is described so as to demonstrate how embodiments of the inventive architecture may be used repetitively and how critical paths may be optimized. One problem is the well-known memory bottleneck because for a fast computation a high data throughput is needed. A matrix with dimensions 64 × 64 already requires as IO-ports two vectors with 64 entries resulting, when encoded in 8 bit, in 1024 bits transferred every clock cycle. At a frequency of 400 MHz a memory bandwidth of 50 GB/s is needed. To address this requirement, experiments were performed using the XCVU37-ES1 chip by Xilinx on the ADM-PCIE-9H7 board by Alpha Delta.

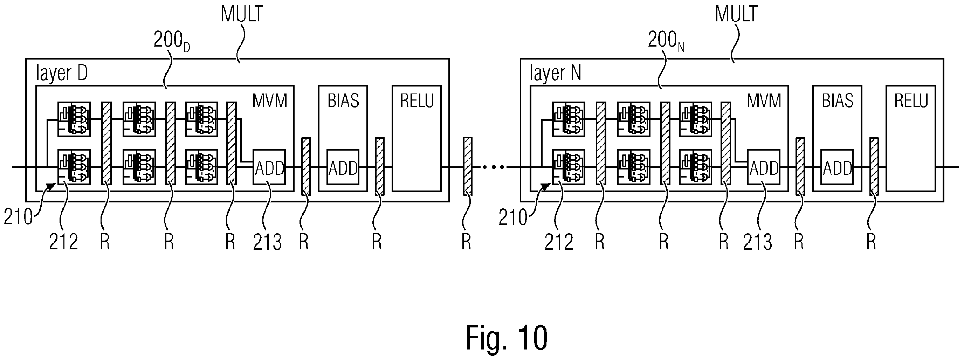

There are multiple approaches to implement a pipeline into the above-described architecture. The traditional approach is to pipeline the architecture bottom-up. This means to insert pipeline-registers between each CC-matrix-vector product, then between each matrix-vector product and eventually between the different computational steps in each layer and between the layers themselves. An abstract illustration of this is presented in Fig. 10 illustrating the respective registers R. A pipeline step spans a CC-matrix-vector product (MVM), a bias addition or a nonlinear activation function (e.g. here RELU). The MULT units represent a CC-matrix-vector product each implemented according to embodiments of the present invention. This implementation is possible as each row of multipliers has the same number of elements and thus every path through said multipliers has the same length. Better than static pipelining in terms of the hierarchical architecture structure, embodiments of the inventive approach allow instead pipelining the implementation of a set of layers as a whole. For the most part, the implementation of CC- matrix-vector products only depends on the dimensions of the original matrix. By this the number of columns needed for the decomposition is determined, it also has influence on the number of consecutive CC-products needed for a certain approximation. As for the implementations of each of the CC-products, the critical path is always the same for each multiplication. This is due to each matrix row having the same number of entries unequal to zero and each individual multiplication being realized as a shift only. With these static properties there is little variance in path length over all paths in an implementation of a matrix-vector product. Thus it is possible to create pipeline steps not only between CC- matrix-vector multiplications but also inside the commutation units implementing said products themselves. The only difference compared to static pipelining is the amount of registers required as multiple rows of computation require a set of registers each. embodiments of the inventive approach to pipelining sees the multiplication as an unfolded net and simply inserts pipeline steps such that the critical path of each step has the same length. In the case of a fixed matrix this benefits highly from the architecture only being made up of adders, as shifts may be hard-wired. Therefore, an optimal pipeline distribution becomes possible and may even be computed beforehand.

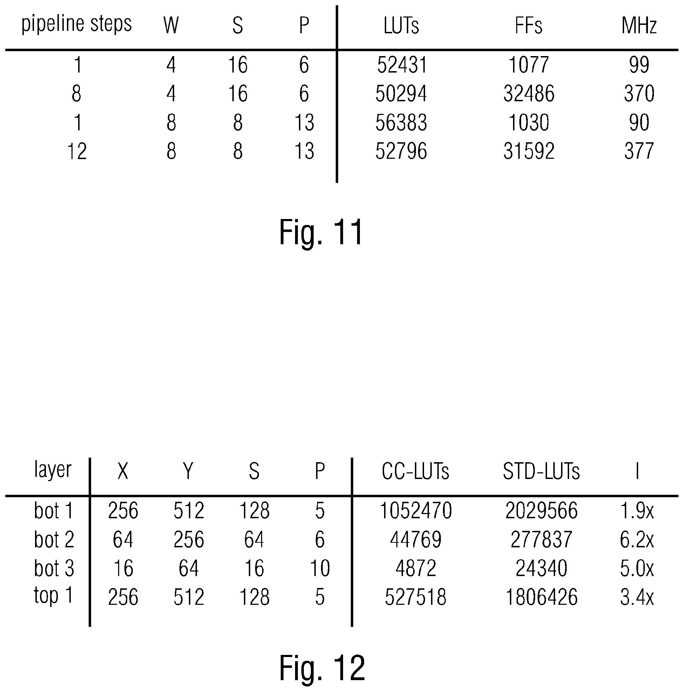

To explore the effects of pipelining our architecture randomly generated matrices are compared with uniformly distributed entries with different counts of pipeline steps each. Next to the resulting hardware complexity for each product the most important results are the corresponding frequencies with that the implementations may be run. The maximal frequency is determined by the critical path length, the longest run of gates between two registers. To determine the optimal frequency the bisection method is used. For each implementation run of embodiments of the inventive architecture a fixed timing goal was set. After the implementation the difference in timing between the goal and the required time for the critical path as determined. According to the gathered information the goal timing is adjusted until the absolute difference passes a termination threshold giving the maximal frequency of the corresponding design. This procedure was done for a set of amounts of pipeline steps for a $64 \times 64$ matrix with two respective approximate decompositions. As for all our results the vector entry bit width is set to 8 bit. Each decomposition requires a different amount of concatenated CC-products per row of computation to reach an 8-bit integer calculation precision. The results of this experiment are presented in the table illustrated in Fig. 11. The data in the table compares the maximal frequencies for designs for decompositions of a $64 \times 64$ matrix with uniformly distributed entries. Each frequency is found using the bisection method starting with 100 MHz. The decomposed matrix of embodiments of the present invention approximates the original up to an error similar to a fixed-point 8-bit arithmetic of a naive approach.

As may be seen from the data in the table of Fig. 11, of all the hardware cost increases with the increasing number of pipeline steps where the LUT counts required for implementation are about constant but the number or required registers increases. The amount of additional registers per added pipeline step depends on the positioning of the step. While registers in between layers or generally outside of the matrix-vector product result in a small increase of the register count, having pipeline steps inside the multiplication unit MULT are more expensive. This is due to the parallel rows of computation implemented which causes the need to put registers in every row. Still both types of pipeline steps lead to a linear increase in registers required. With an increase in pipeline steps the maximal frequencies of the designs increases, reaching a peak at about 400 MHz. This is the same for implementations requiring more sequential CC-matrix-vector products and ones with less, as the minimal pipeline steps only depend on the greatest atomic unit in the chain being adders in both cases. The only difference in the resulting implementations for both implementations is the number of pipeline steps. A high number of pipeline steps does not harm the efficiency as there are no hazards occurring during computation.

Now, an evaluation of the above-described embodiments for an architecture and a hardware realization on a reconfigurable hardware is given. For the purpose of analyzing embodiments of the inventive architecture, a recommender system is used. This is used by different companies, for example streaming services to give their customers advice about movies they might like based on their consumer behavior. During the last years these systems have become increasingly reliable in their forecasts, not least because of the more frequented use of algorithmic models aided by MLP concepts. One of these algorithms has been implemented recently (in 2019) by the Deep Learning Recommendation Model for Personalization and Recommendation System (DLRM) (see reference [45]) In order to better understand the value of this model's single components, first a short introduction on the principles of recommendation networks is given. Recommendations today are given based on two underlying principles namely content-based filtering and collaborative filtering. While the former approach bases its prediction on the users' own preferences, collaborative filtering tries to imply a solution based on the preferences of similar users. One of the first systems taking advantage of both of these concepts, was the factorization machine. The prediction formula of the factorization machine consists of two parts, the regressive part and the matrix factorization part. The regression part handles both sparse and dense data of the feature vector and may be seen as the content-based filtering part of the system. The matrix factorization part, on the other hand, accounts for the interactions between feature blocks, which represents the collaborative filtering part. Even though both of these models are already integrated in this straight forward implementation, the results may be further refined by making use of MLP layers. Due to its non-linearity it is possible for MLPs to learn even higher degrees of interactions of more features, than by using only a matrix factorization, which is limited by its simple dot product to learning interactions of degree 2.

DLRM now brings those ideas together and introduces a new concept by separating the features into dense continuous and sparse categorical features, which are represented by embedding vectors of the same size. The dense features are then fed into a bottom MLP which transforms them into an intermediate vector the same size as the embedding vectors of the categorical features before. Similar to the factorization machine in the second stage, the dot product between the embedding vectors and the output of the bottom MLP is computed, which represents the computation of second- order interaction of different features. The products are then concatenated to the result from the bottom MLP and fed into another top MLP and finally a sigmoid function in order to obtain a probability.

For testing embodiments of the inventive approach, the weights in the MLP layers of an already trained DLRM network were exchanged with the ones obtained by the utilization of embodiments of the inventive matrix decomposition algorithm. The results of the implementation are now given. As a basis the same hardware platform was chosen as was for all other experiments presented above. First, a layer-by-layer comparison of embodiments of the inventive approach and a naive implementation implementing a trained ANN is considered. The results are displayed in the table of Fig. 12. This table compares the hardware costs of implementing the matrix-vector products of each layer of the DLRM. The Layer denotes the name of the corresponding layer, with an $X \times Y$ weight-matrix. S is the slice width and P the number

$$I = \frac{CC\ LUTs}{STD\ LUTs}$$

of consecutive CC-matrix-products. $I = \frac{CC\ LUTs}{STD\ LUTs}$ is the factor by which embodiments of the inventive approach improve the standard (naive) implementation. It is immediately obvious that embodiments of the inventive approach perform better than the naive implementation with the improvement factor varying between 2x and 6x. It is notable that in the Bottom-2 layer said factor is very high compared to other results. This is due to properties of the matrix used in this layer. With the underlying matrix being a $64 \times 256$ matrix it is quite big compared to, e.g., the next layer only featuring a $16 \times 64$ matrix. On top of that the matrix is not at all sparse leading to an overall high improvement over the naive implementation. The Bottom-1 layer also features an even larger $256 \times 512$ matrix matrix but it is not as dense as the matrix of the Bottom-2 layer. Thus the improvement of 1.9x when using embodiments of the inventive approach compared to a naive implementation is not as high. Overall both the naive implementation and embodiments of the inventive approach require an enormous amount of LUTs to be implemented on a FPGA, but summing up all layers embodiments of the inventive approach save 39% of the hardware cost. As mentioned before, pipelining the resulting architecture is very efficient for embodiments of the inventive approach as the registers may be placed in a way that all paths through the pipeline step have the same length. This may not be said for the naive implementation as a comparable assurance may not be made.

*Further embodiments*

In the embodiments described above, reference has been made to an architecture implementing the inventive approach using programmable logic, for example by appropriately programming an FPGA, so as to implement the CC-matrices used for approximating the respective vertical slices of the matrix W. However, the present invention is not limited to such embodiments, rather, as mentioned above, also a hard-wired implementation of the shift operations may be implemented in certain situations.

In accordance with yet other embodiments, rather than relying on a configurable logic, also a programmable logic or a fixed hardware, like an application specific integrated circuit, ASIC, with the possibility of processing non-constant CC matrices may be used for implementing the above described embodiments of the inventive approach.

In accordance with embodiments, for implementing the inventive approach only multiplications with powers of 2 and additions are needed which, in turn, results in the following basic modules for implementing the inventive approach, which are illustrated in Fig. 13. Fig. 13(a) illustrates a shift module 240 for shifting the input value a to the right by b places (to the left if b is negative). Fig. 13(b) illustrates an adder module 242 for adding the inputs a and b so as to yield the output c = a + b.

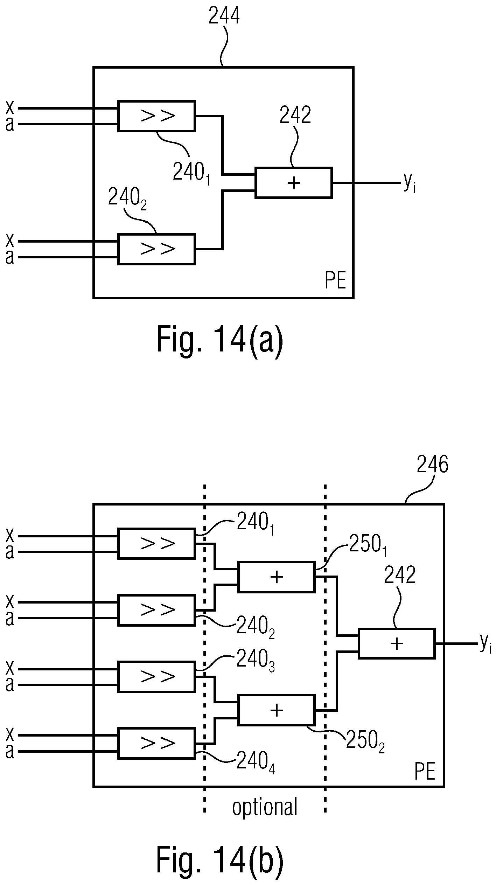

One or more of the shifter and adder modules may be combined into simple or complex processing elements, PEs. Fig. 14(a) illustrates a simple PE 244 which includes two shift modules $240_1$ and $240_2$ and one adder module 242 to be used for a matrix-vector product calculation for matrices having two entries per row. The PE 244 generates exactly one element $y_i$ of the output vector. The PE may be scaled to calculate more entries per time instance, and inputs in steps of powers of 2 may be useful as well as a pipeline stage between the shift and adder modules for minimizing a critical path. Fig. 14(b) illustrates a PE 246 including four shift modules $240_1$ to $240_4$ and one adder module 242 with two optional pipeline stages 248 illustrated between the dotted lines. The pipeline stage 248 includes further adder modules $250_1$ and $250_2$. For example, the processing blocks described above with reference to Fig. 4 and Fig. 6 may be implemented using one or more of the PEs illustrated in Fig. 14. The respective shifters cause the elements of the input vector to be shifted according to the non-zero elements in the CC-matrix to be implemented by the PE. Thus, the above described PEs may implement a processing block 212 with the shifters implementing the shifting device or shifter device 214 and with the adder implementing the combiner 216.

In the following, embodiments for implementing the inventive approach using the above PEs are described in more detail. In accordance with the first embodiment, a naive implementation is described which is a simple realization without specific considerations of the memory transfer. A matrix-vector multiplication of one decomposed matrix with one vector is assumed, and the matrix A is assumed to have the following properties:

- the entries are only formed of powers of 2, and
- in each row there are exactly two entries.

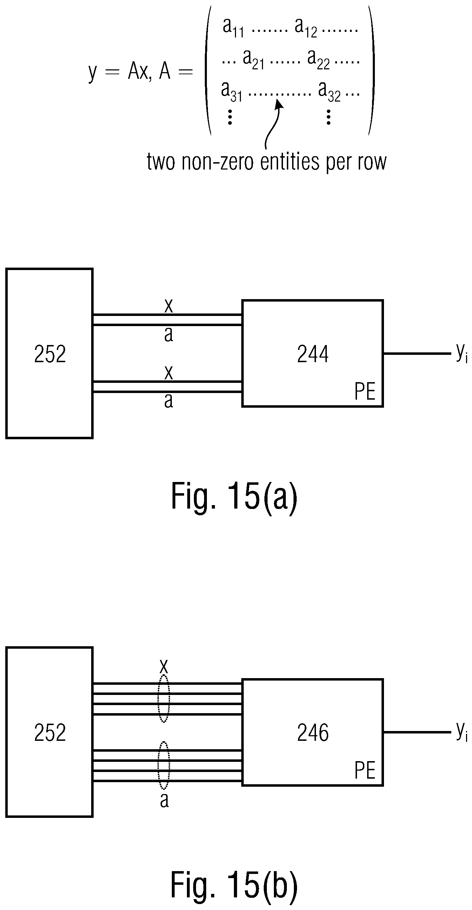

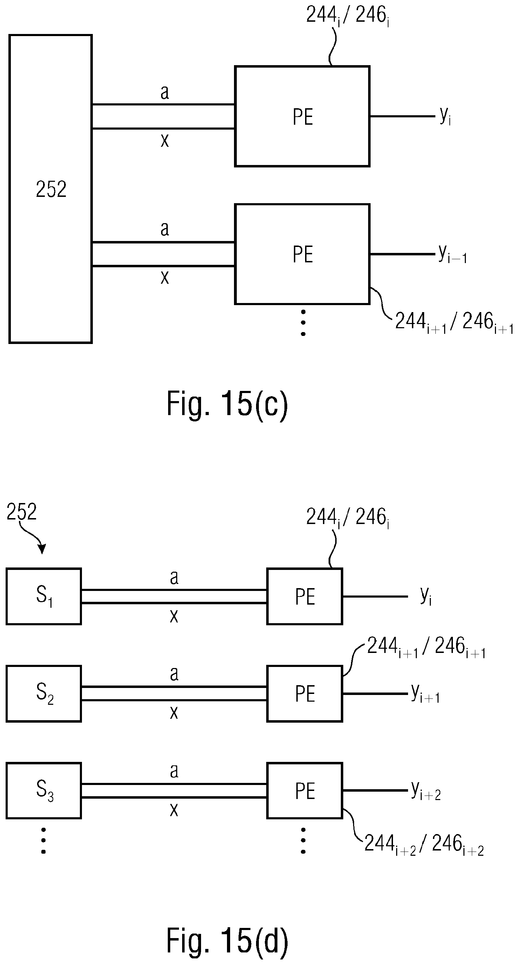

Fig. 15 illustrates embodiments for the naive implementation for such a matrix-vector multiplication. As is illustrated in Fig. 15(a) for calculating the element $y_i$ of the output vector exactly one PE 246 (see Fig. 14(a)) is needed which is connected to a memory 252. The memory 252 may be implemented in a suitable technology, for example, the memory 252 may be a FF, SRAM, DRAM. A control unit, which is not illustrated in the figure, is also provided for addressing the memory 252 for a random memory access. As illustrated in Fig. 15(a), the PE 244 receives from the memory 252 at each time instance two input vector elements $x_1$ and $x_2$ of the vector to be multiplied with the matrix A which, as is illustrated in Fig. 15(a), includes in each row two entries being different from zero and, as stated above, being represented by powers of two. Therefore, for calculating the matrix-vector product using the PE 244, a respective output element $y_i$ of the output vector is calculated by providing to the respective shifters of the PE 244 (see Fig. 14(a)) the input vector elements $x_1$ and $x_2$ of the input vector which are shifted according to the respective non-zero entries in row $i$ ($i = 1, 2, 3, ...$) of the matrix A. Both, the input vector elements $x_1$, $x_2$ and the associated entries $a_1$; $a_2$ from row $i$ of the matrix A are read from the memory 252.

In case there are more than two non-zero elements per row within the matrix $A$, the scaled PE 246 (see Fig. 14(b)) may be employed, as is illustrated in Fig. 15(b) receiving, for calculating the output vector element $y_i$ the respective input vector elements $x$ to be multiplied with the respective entries in row $i$ of the matrix A which, as mentioned above, is achieved by shifting the input vector elements $x$ by $\alpha$ places to the right and by adding the shifted results, thereby yielding the output vector element $y_i$. Again, the respective input vector element $x$ and the respective non-zero elements $a$ from row $i$ of the matrix A are provided by the memory 252.

In the embodiments of Fig. 15(a) and Fig. 15(b), the respective output vector elements $y_i$ are calculated sequentially. However, by providing more than one PE 244/246 a parallel processing may be implemented, thereby allowing to calculate in parallel multiple values for the output vector elements, for example $y_i$, $y_{i+1}$, $y_{i+2}$, ... . Fig. 15(c) illustrates such a parallel processing structure including a plurality of PEs $244_i/246_i$, $244_{i+1}/246_{i+1}$, ... which are selected dependent on the number of non-zero elements in the matrix A. From the memory 252 the PEs receive the respective non-zero elements $a$ of the matrix A for the respective row $i$, $i+1$ as well as those input vector elements to be multiplied/shifted with/by the associated non-zero matrix elements in the respective row $i$. When implementing such a parallel processing the memory 252 also needs to be addressed in parallel, however, parallel random memory accesses may be difficult. Therefore, in accordance with other embodiments, rather than using a single memory, a distributed memory, like an SRAM, may be used. Fig. 15(d) illustrates an embodiment in accordance with which the respective PEs $244_i/246_i$, $244_{i+1}/246_{i+1}$, $244_{i+2}/246_{i+2}$ ... have associated therewith respective memories S1 to S3 providing the input data for yielding the output vector elements $y_i$, $y_{i+1}$, $y_{i+2}$... as described above. In accordance with embodiments, the respective memory elements S1, S2, S3 may include redundant data. Further, the local memories S1 to S3 may be connected to a global memory, like a DRAM, from which they receive the respective elements to be provided to the PEs.

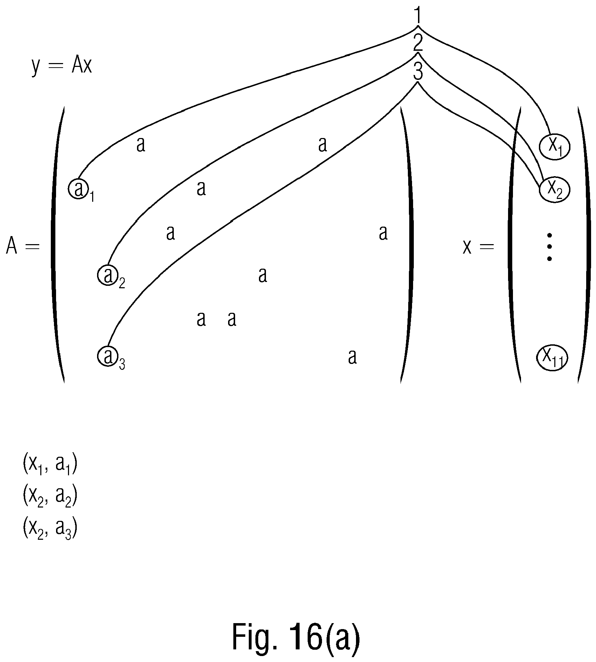

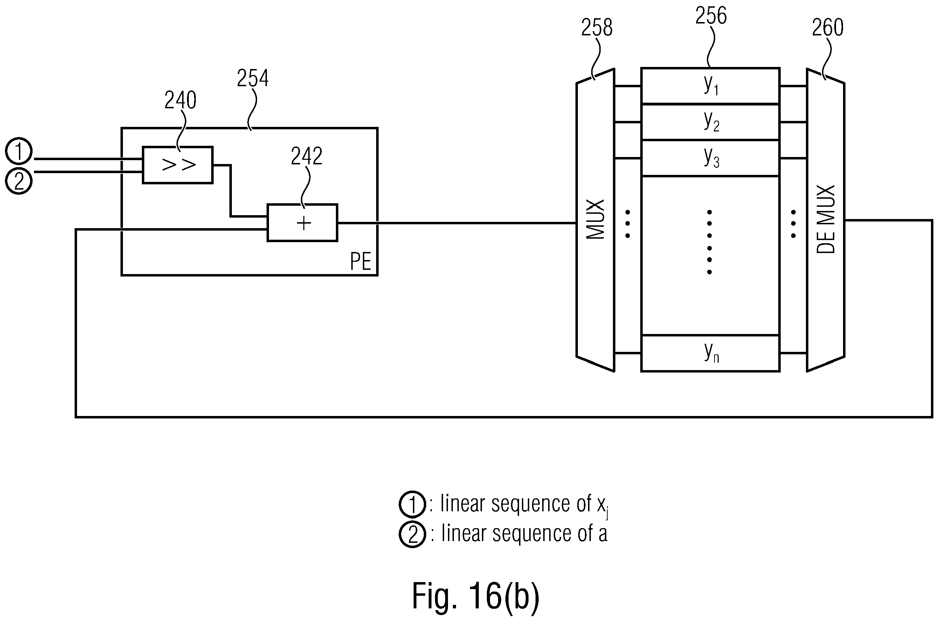

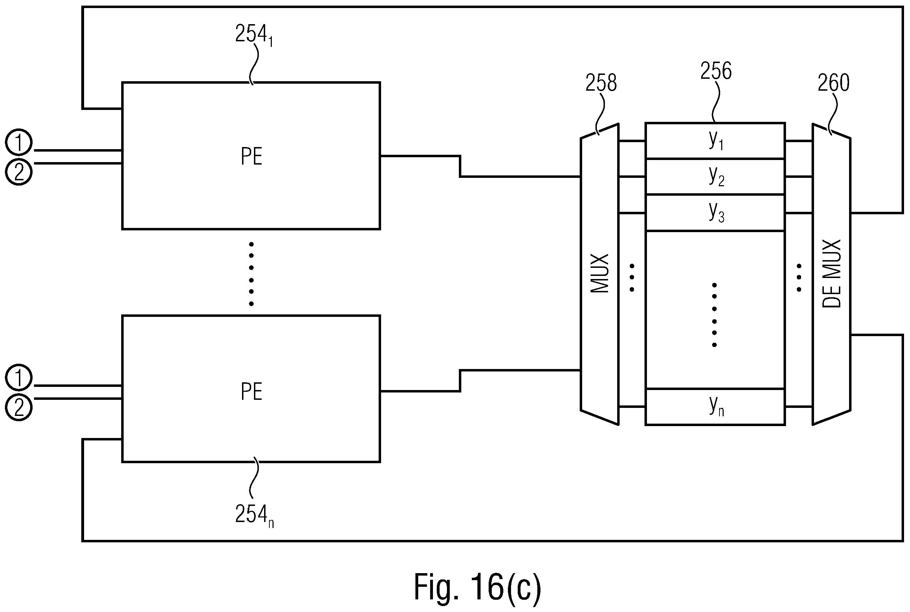

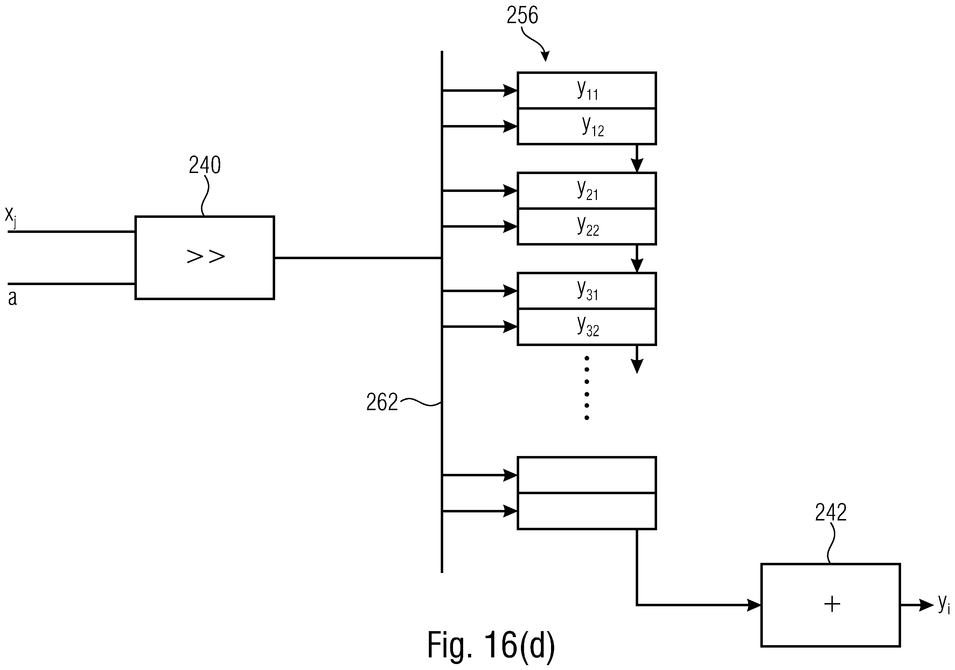

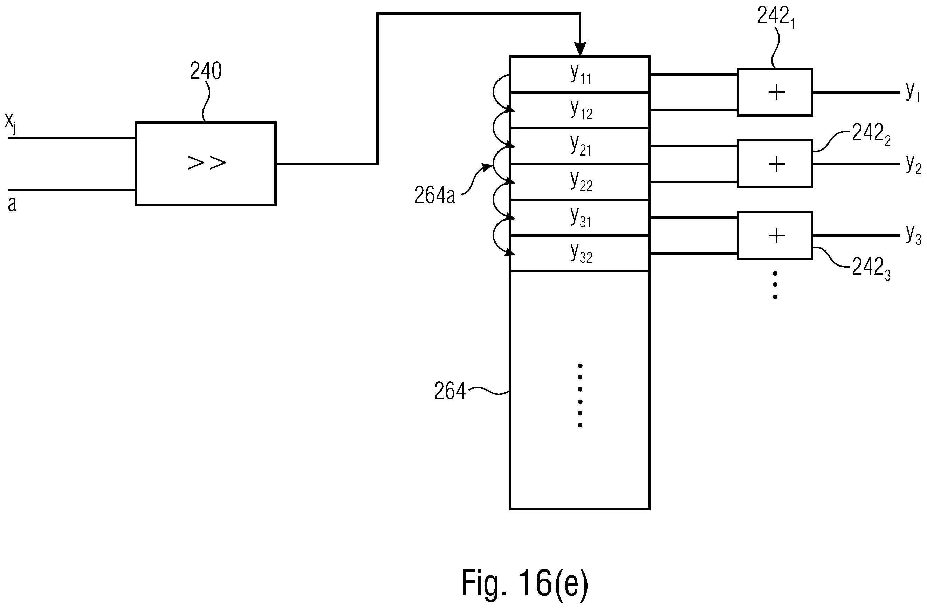

In the embodiments described above with reference to Fig. 15, the respective PEs obtain the input data, namely the respective input vector elements and the respective matrix elements by a random memory access. However, such random memory accesses may be difficult to implement. In accordance with further embodiments of the present invention, difficulties arising from random memory accesses may be avoided by rearranging the elements to be provided to the associated hardware architecture. Fig. 16 illustrates embodiments for implementing the required shifts and additions for implementing the inventive approach with an improved the memory access. In accordance with the embodiment of Fig. 16, the input vector X is streamed into the architecture linearly, i.e., one input vector element $x_j$ after the other is input into the architecture. The matrix A is resorted so that all matrix elements defining the shifting are available once the input vector element $x_j$ is available. In other words, all calculations which may be performed once the input vector element $x_j$ is available are to be carried out which, in turn, yields the order in which the data from the matrix A is provided. Since the matrix A is known, the resorting or reordering may be performed statically using, for example, a TJDS or CSR data format. In addition, it is assumed that the number of entries per row in the matrix is constant, for example 2, so that a constant number of summands for calculating each $y_i$, i.e., each output vector element, is given. Fig. 16(a) illustrates the just mentioned concept of resorting the matrix A having two entries per row. As mentioned above, the input vector elements $x_j$ are provided sequentially or linearly, i.e., one after the other, into the hardware architecture so that, initially, the input vector element $x_i$ is provided and all calculations associated with this input vector element are performed before the next input vector element is processed. In the example of Fig. 16(a) this means that when performing the calculation, rather than providing, initially, the matrix elements in the first row, only the matrix element $a_1$ in the second row is provided which is the only element to be multiplied with $x_1$. Then, all matrix elements associated with the input vector element $x_2$, namely matrix elements $a2$ and $a3$, from the matrix A are provided, and so on. This results in the above described situation that for each input vector element $x_j$ all required calculations are performed once the input vector element $x_j$ is

available. The above described approach may be realized in hardware in accordance with various embodiments.

Fig. 16(b) illustrates an embodiment in which a PE element 254 is provided which includes a shifter 240 in accordance with Fig. 13(a) and an adder 242 in accordance with Fig. 13(b). The shifter receives at its input the linear sequence of the input vector elements $x_j$ and at its input b a linear sequence of the matrix elements $a$ by which the currently applied input vector element $x_j$ is to be multiplied which, as mentioned above, is realized by a shifting of $x_j$ dependent on the value of the matrix element. The output of the shifter 240 is connected to a first input of the adder 242, and an output of the adder 242 is connected to a memory 256 via a multiplexer 258. The memory 256 stores the values of the respective output vector elements $y_1$ to $y_n$. A second input of the adder 242 is connected to the memory 256 as well via a decoder or de-multiplexer 260. The operation of the architecture of Fig. 16(b) is such that at each clock an input vector element $x_j$ is shifted by the associated matrix element $a$, and the result is either stored in memory 256 at the location of the output vector element $y_i$ which is currently calculated, in case it is the first entry in the memory 256. Otherwise, the result is added to the already stored value for $y_i$ in the memory 256. In accordance with the just described embodiment, the PE 254 is different from the PEs described earlier in that it includes one shifter 240 and one adder 242. In accordance with embodiments, a fast memory technology, like FF or SRAM, may be used for implementing the memory 256.

The processing of the input vector and the matrix may be performed in parallel by providing an array of PEs 254. Fig. 16(c) illustrates an array of n PEs $254_1$ to $254_n$ each receiving a linear sequence of input vector elements, for example, a first number of input vector elements is applied to the first PE $254_1$ while a second number of input vector elements is applied to the PE $254_n$. Again, the associated matrix elements $a$ are also provided and, as described above with reference to Fig. 16(b), the resulting output vector elements $y_i$ are stored in the memory 256 which is now coupled to all PEs $254_1$ to $254_n$, more specifically to the outputs and second inputs of the respective adders 242 in the PEs.

In the embodiments of Fig. 16(b) and Fig. 16(c), the additional multiplexers/de-multiplexers 258/260 are provided which may require a substantial amount of area in the hardware architecture and which may lead to a long critical path. To reduce the area consumption in the hardware architecture and, in case of a non-pipelined architecture, a long critical path, in accordance with further embodiments, the adding is no longer performed at the beginning of the structure but is moved towards the end thereof. This requires more memory, however, the actual amount of memory needed is known as for each row a constant number of entries exists. Writing into the memory may be accelerated by providing a bus structure from which each memory takes those entries that are needed, or by means of a shift register by means of which the data travels through the memory until it has reached the correct memory location. Fig. 16(d) and Fig. 16(e) illustrate embodiments for an architecture avoiding multiplexer structures. The architectures include the shifter 240 receiving, as described above with reference to Fig. 13(a), the linear sequence of input vector elements $x_j$ and the associated matrix elements. In the embodiment of Fig. 16(d) the output of the shifter 240 is provided on a bus 262 to which the memory 256 is connected which now includes for each row a number of entries corresponding to the number of non-zero elements in the matrix (in the depicted embodiment, two entries per row, like entries $y_{11}$, $y_{12}$, $y_{21}$, $y_{22}$, ...). Fig. 16(e) illustrates another embodiment which, instead of the bus structure 262, makes use of the above mentioned shift register 264 to which the output from the shifter 240 is provided and which, in the depicted embodiment, includes for each output vector element two entries corresponding to the number of non-zero elements in the matrix, namely entries $y_{11}$, $y_{12}$, $y_{21}$, $y_{22}$, .... As indicated by the arrows 264a, an input to the register 264 is shifted until the data is at the correct memory location.

Once all values of the input vector $X$, namely all input vector elements or values $x_j$, and all associated non-zero matrix elements $a$ moved through the architectures of Fig. 16(d) or Fig. 16(e), the memories 256/264 already include the partial results which are correctly sorted and which only need to be added pairwise so as to achieve the respective output vector values $y_1$, $y_2$, .... This may be achieved by reading out the memory 256 or the shift register 264 sequentially so that a subsequently provided adder 242 (see Fig. 16(d)) yields the respective values $y_1$, $y_2$ sequentially. In case the values are needed immediately or in parallel, instead of providing a single adder 242 as in Fig. 16(d), each of the entries associated with a row may be associated with a dedicated adder, as is illustrated in Fig. 16(e) in which each of the shift register entries associated with one output vector element has associated therewith a respective adder $242_1$ to $242_3$. Providing dedicated adders as shown in Fig. 16(e) may be advantageous for multiplications with multiple matrices.

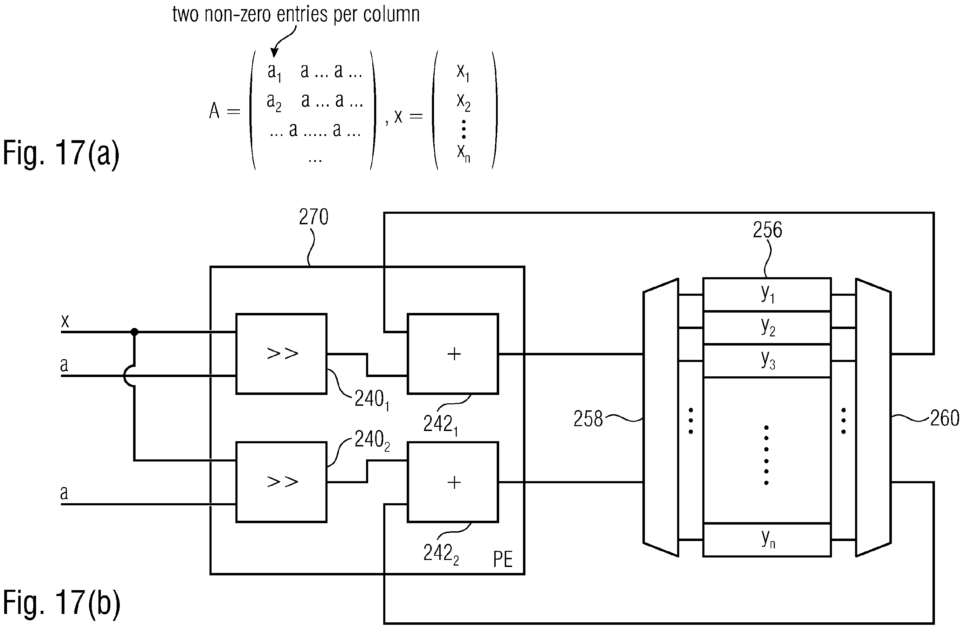

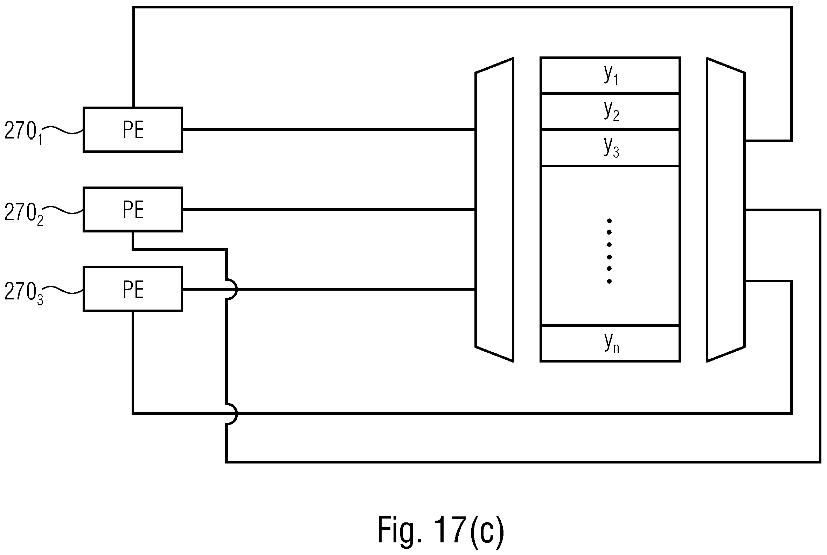

In the following, further embodiments for improving the memory access for implementing the inventive concept is described. With regard to Fig. 16, embodiments have been described in which the number of entries per row of the matrix, which corresponds to a constant number of summands for each output vector element $y_i$ was given. In accordance with other embodiments, the number of entries per column of the matrix is considered constant so that a given input vector element $x_j$ is only needed for a constant number of calculations and, once the number of calculations has been completed, it may be discarded. Fig. 17 illustrates further embodiments for implementing required shifts and additions for implementing the inventive approach with an improved the memory access. Fig. 17(a) illustrates the matrix A having in each column a constant number of matrix elements. In the embodiment of Fig. 17(a) a number of two entries per column is assumed, however, the inventive is not limited to such embodiments, i.e., also more than two entries per column may exist, provided that in each column the same number of entries is given. Given the example of Fig. 17(a), this means that each input vector element $x_j$ needs to be shifted twice so that, in accordance with an embodiment, the architecture (see Fig. 17(b)) has a PE 270 including two shifters $240_1$ and $240_2$ as well as two adders $242_1$ and $242_2$. Each of the sifters $240_1$ and $240_2$ receives a linear sequence of the input vector elements $x_j$. Further, the shifters $240_1$ and $240_2$ receive the different matrix elements from the columns, like matrix elements $a1$ and $a2$ for shifting the input vector element $x_1$ accordingly. The output of the shifters is input into the respective adders $242_1$ and $242_2$, the output of which is connected via a multiplexer 258 to the memory 256, while a second input of the respective adders is connected via the decoder or de-multiplexer 260 to the memory 256 so that, for each of the output vector elements $y_1$ to $y_n$ the respective results of the shift operation are obtained by adding the output of the shift operation to a previously stored result by means of the adder 242. In other words, the intermediate results are accumulated for each output vector value $y_i$ in the memory 256 by providing the two adders $242_1$ and $242_2$ of the PE 270. Access to the memory maybe implemented by using different technologies, like providing a multiplexer/de-multiplexer as illustrated in Fig. 17(b) or by employing a bus system as described above with reference to Fig. 16(d) or by employing a shift register as described above with reference to Fig. 16(e).

Again, an array of PEs 270 may be implemented to allow a calculation using multiple input vector elements at the same time, as is schematically illustrated in Fig. 17(c).

With reference to Fig. 16 and Fig. 17 it is noted that, for the depicted embodiments, it has been assumed that the matrix includes only two entries per row or per column, however, the above discussion readily illustrates that the respective PEs may be easily extended to calculate matrix-vector products for matrices having more than two entries per row or per column. Embodiments of the inventive approach, as described above, make use of the fact that the number of entries in each column or row is constant or the same.

In accordance with further embodiments it is preferred to provide pipeline structures for implementing the PEs and the multiplexer/de-multiplexer structures in view of the critical path. Dependent on the implementation saving the most resources, multiplexer/de-multiplexer structures may be replaced by the bus system (Fig. 16(d)) or a shift register (Fig. 16(e)) or vice versa.

In accordance with the embodiments of Fig. 16 and Fig. 17, a resorting or reordering of the data, i.e., the matrix elements is performed and the resorted matrix elements are stored in a memory to be provided to the respective PEs as described above. In case of an ANN, this may be done statically as the matrices for the ANN, in general, so not change. However, in accordance with other embodiments, the rearrangement of the data may also be carried out without using additional memory, for example by implementing a Bitonic sorting network. The sorting network may also be used for rearranging the results of a matrix-vector-multiplication so as to from an input for a following stage.

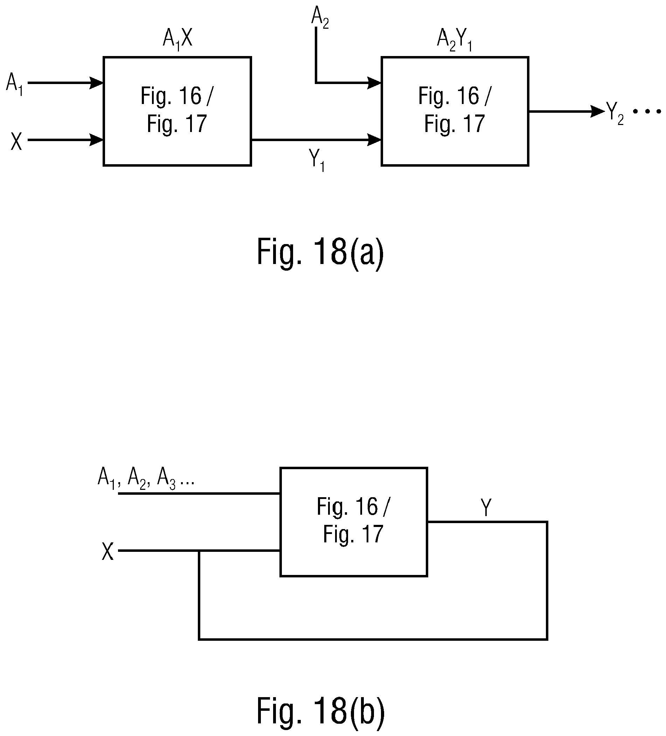

As described above, decomposing the matrix W requires the successive multiplication of multiple matrices, and for each of the multiplications the above-described architectures in accordance with any one of Fig. 14 to Fig. 17 may be employed. Fig. 18 illustrates embodiments for implementing inventive approach for a multiplication of two or more matrices. For example, as is illustrated in Fig. 18(a), a plurality of architectures in accordance with Fig. 16 or Fig. 17 may be connected into an array so that a first structure according to Fig. 16 or Fig. 17 is used for the vector multiplication of the matrix $A_1$ and the vector X and a second architecture according to Fig. 16 or Fig. 17 is used for the multiplication of the matrix $A_2$ and the vector Y which is the output vector of the first multiplication. It is noted that each of the multiplications may be implemented in turn by respective PE arrays as described above, e.g., either the same or different implementations for the respective stages may be used. Each of the calculations may use an associated coding. For example, the shifters in the first multiplication may perform a coarse shifting while the shifters towards the end of the chain become finer. This allows saving memory space and the use of simpler shifter structures as they do not have to perform shifting with an arbitrary interval, but only within a selected interval. Dependent on the implementation of the respective architectures of Fig. 16 and Fig. 17, the output vector components $y_i$ are not necessarily calculated completely in parallel. Also, the order of the calculations is not necessarily in order but may be arbitrarily permutated. Since the output vector elements of a first stage correspond to the input vector elements of the next stage there is still a linear memory flow, however, it may be in a different order so that, accordingly, also the matrix of the following stage may need to be adapted.

In accordance with further embodiments, as illustrated in Fig. 18(b), rather than providing a chain of PEs as illustrated in Fig. 18(a), a single stage may be provided the output of which is coupled back to the input so that sequentially the matrix elements of the respective matrices $A_1$ to $A_3$ are applied. Initially, when the first matrix $A_1$ is processed, the input vector components $x_j$ are applied, while for the following matrices, the output is used as an input. This, in accordance with further embodiments, may require some synchronization which may be achieved by providing appropriate memory structures, however, it may still save area, for example, on an integrated circuit chip, when compared to a structure as shown in Fig. 18(a).

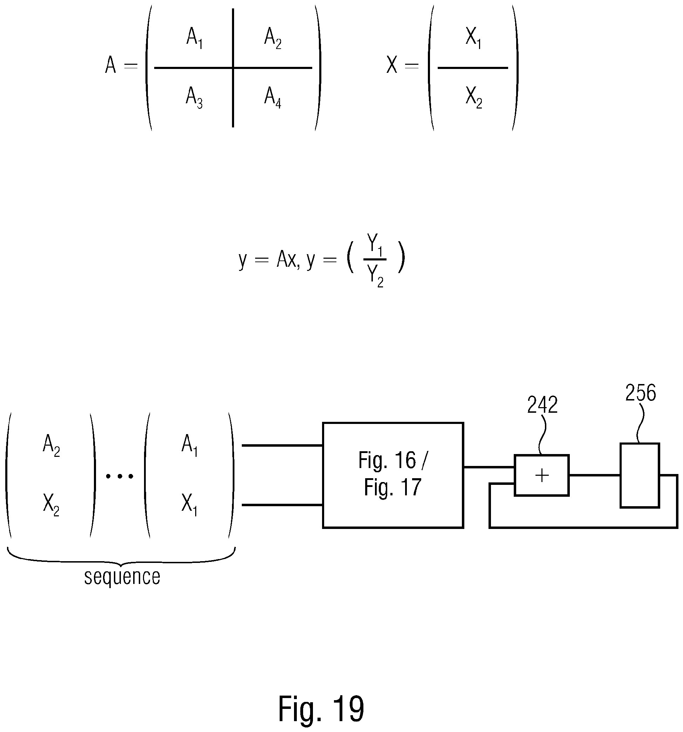

In accordance with the embodiments described with reference to Fig. 16 and Fig. 17, the architecture may be limited to a maximum size of the matrices, which is due to the internal memory that is required for performing the sorting of the data. However, in accordance with further embodiments, this limitation may be avoided by separating a large matrix into partial matrices as is now described with reference to Fig. 19. As is illustrated in Fig. 19, a matrix A may be separated into four partial matrices $A_1$ to $A_4$ and, likewise, the input vector is separated into a first input vector $X_1$ and a second input vector $X_2$. The respective calculations for the partial matrices may be performed by implementing any of the architectures of Fig. 16 and Fig. 17 with an appropriate adder 242 and memory 256 for accumulating the results.

While embodiments of the present invention have been described above with reference to a certain matrix-decomposition, it is noted that the present invention is not limited thereto. Rather, in accordance with other embodiments, different matrix-decompositions may be used. For example, it is possible to use less consecutive matrices to approximate one matrix-slice. Another option is to use matrix-decompositions that focus on being accurate to a lesser degree while using less consecutive products for approximating matrix slices or that slice matrices in a different manner achieving higher architectural efficiency.

*Lempel-Ziv inspired Computation Coding*

In accordance with further embodiments, the computation coding may, similar to the Lempel-Ziv algorithm, dynamically update a codebook based on the input. Stated differently, when implementing the respective processing blocks for implementing the above-described embodiments of an architecture for CC-matrix-vector products, one or more or each of the second to P-th processing blocks may receive, in addition to an output of a preceding processing block also the input of the preceding processing. Providing to the one or more or to each of the second to P-th processing blocks also the input of the preceding block is schematically indicated in Fig. 5 by the dotted arrow 230. It is noted that Fig. 5 depicts an embodiment in which only the second processing block $F_{S,2}$ of the processing chain 210s receives the input of the preceding block $F_{S,1}$ in addition to the output of $F_{S,1}$. However, in accordance with other embodiments, more than one or all of the second to P-th processing blocks may receive the input vector of a preceding block in addition to the output vector of the preceding block. Also, in accordance with yet further embodiments, providing the input to a preceding block and the output of the preceding block to the next processing block may be implemented in one or more or all of the processing chains $210_1$ to $210_2$. Also when implementing the inventive approach only with a single processing chain, within this chain one, some or all of the processing blocks, if more than one processing block is employed, may receive both the input and the output of the preceding block.

In accordance with embodiments, providing the input to a certain block as a further input to a following block may be implemented by including into the block output vector z of a processing block 212 also its block input vector received at input 217. Fig. 4 and Fig. 5 schematically represent an embodiment in accordance with which the input vector v, as is indicated by line 230, is added to the output vector z so that the block output vector includes both the processed input vector to the block 212 and the original non-processed input vector block 212. Also in Fig. 4, this kind of bypass line 230 for applying the input vector v received at input 217 to the output vector z is illustrated.

It has been found that providing to a processing block, in addition to an output of a preceding processing block, including the input of the preceding processing yields an excellent performance even for very small matrices.

Also in accordance with such embodiments, the matrix $W$ is cut/sliced into S sub-matrices $W_s$ as in Equation (2) and the vector $v$ is cut into S sub-vectors $v_s$ (see Equation (4)). Each sub-matrix $W_s$ is decomposed into the product of matrices $W_s \approx F_{s,P} F_{s,1} F_{s,0}$, utilizing the function $g(\ )$ defined below, as

$$F_{s,0} = I$$

$$F_{s,p} = \begin{bmatrix} g(w_{s,p}, F_{s,p-1} \, F_{s,2}F_{s,1}, 1) \\ I \end{bmatrix}, \qquad \forall 1 < p < P$$

$$F_{s,P} = g(W_s, F_{s,P-1} \, F_{s,2}F_{s,1}, 0)$$

with $w_{s,p}$ denoting a row of $W_s$. Among all the rows of $W_s$, that row $w_{s,p}$ is chosen which gives the most accurate approximation. The function $g(\ )$ is defined recursively for all non-negative integers s, all matrices, and all row vectors $a$ as:

$$g(a, C, s) = \underset{\omega \in S_{dima+\{g(a,C,s-1)\}}}{\mathrm{argmin}} \|\omega C - a\|_2$$

with + denoting the Minkowski sum of sets,

$$S_K = [(\omega_1, \ldots, \omega_k, \ldots, \omega_K) : \log_2 |\omega_K| \in \mathbb{Z} \forall k \wedge \|\boldsymbol{\omega}\|_1 = \|\boldsymbol{\omega}\|_\infty,$$

$$g(\boldsymbol{a}, \boldsymbol{C}, -1) = 0$$

and the function $g(\ )$ with matrix argument in first position understood as applying the function separately to all rows of the matrix argument.

The set $S_K$ species all row vectors in $K$ dimensions, which contain only a single nonzero element. Furthermore, this non-zero element is (up to the sign) a power of two. In other words, it contains all vectors that may be constructed by scaling a unit vector by an arbitrary signed power of two. $g(\boldsymbol{a}, \boldsymbol{C}, 1)$ finds that row vector that may be multiplied to an arbitrary column vector with a single addition, sign flip, and shift such that the mean-squared error between $g(\alpha, \boldsymbol{C}, 1)\boldsymbol{C}$ and $\alpha$ is minimized. $g(\alpha, \boldsymbol{C}, s)$ finds that row vector that may be multiplied to an arbitrary column vector by only $s$ additions, sign flips, and shifts such that the mean-squared error is minimized among all vectors that differ from $g(\boldsymbol{a}, \boldsymbol{C}, s - 1)$ in at most a single component.

*Lempel-Ziv inspired Computation Coding utilizing common terms*

In accordance with further embodiments, the computation coding may approximate the matrix $\boldsymbol{W}_s$ by a product of matrices such that the above described embodiment *"Lempel-Ziv inspired Computation Coding"* (LZCC) may be further improved. While LZCC embodiment achieves significant performance improvements, per matrix factor/iteration only one addition is performed, which leads to a significant number of matrix factors required for growing matrix size and/or precision. In accordance with further embodiments, an algorithm is presented that may be seen as an alternate implementation of the LZCC embodiment addressing this issue. The general structure proposed by the LZCC embodiment is expanded, however instead of using the Mean-Squared Error (MSE) as a target metric, the approach is to decompose an approximation of the matrix W or the matrix slices into common terms to create codewords.

An approximation of the matrix entries is obtained in the Canonical signed digit, CSD, representation. Hence, the entries of the matrix $\boldsymbol{W}_s$ may be approximated as

$$W \approx \boldsymbol{\gamma}^T \boldsymbol{\omega}_{m,n}$$

with

$$\boldsymbol{\gamma} = (2^U, 2^{U-1}, \ldots, 2^{L+1}, 2^L)^T$$

where $\gamma$ contains the factors of the CSD representation for some upper and lower precision U and L, respectively. Further, $\omega_{i,j}$ contains the weights of the CSD representation and, thus, its elements are chosen from the ternary alphabet {-1, 0, +1}.

Using the CSD representation, each element of the output vector z is given as (cf. equation (8))

$$[\boldsymbol{z}]_m = [\boldsymbol{W}\boldsymbol{v}]_m = \sum_{\forall n} \boldsymbol{\gamma}^{\mathrm{T}} \boldsymbol{\omega}_{m,n} [\boldsymbol{v}]_n = \sum_{\forall n} \sum_{\forall l} [\boldsymbol{\gamma}]_l [\boldsymbol{\omega}_{m,n}]_l [\boldsymbol{v}]_n$$

The following two-element-terms may be found when inspecting the above equation:

$$\pm 2^a \big([\boldsymbol{v}]_n \pm 2^b [\boldsymbol{v}]_{\tilde{n}}\big), \quad n \le \tilde{n}$$

If there are at least two of these terms, only differing by the factor $\pm 2^a$, it is sufficient to compute them once and reuse the result for subsequent occurrences. Hence, by searching for recurring patterns within and across the weight vectors $\omega_{m,n}$ these common terms may be identified. Identifying all possible combinations of common terms, including terms with more than two elements, is a difficult problem and as described in reference [46] in the worst case both exponential in the precision (e.g. number of bits per entry) and the number of rows of the matrix. The decomposition can be applied to both the matrix W or slices of the matrix $\boldsymbol{W}_s$. Within the following the general case of a sliced matrix $\boldsymbol{W}_s$ is assumed. The embodiments resort to the following scheme:

1. Identify all two-element terms by an exhaustive search of the approximated, sliced matrix.

2. Count the number of occurrences of each term. The number of occurrences of a term is defined as the number of terms with equal $n$, $\tilde{n}$ and factor $2^b$.

3. If a term only occurs once it may be dropped from the search, as using this term as a codeword in the sequel does not result in a decrease in additions.

4. Iteratively search for larger order terms (four elements, six elements,...) by searching combinations of the two element terms and any larger terms obtained in previous iterations. If only patterns with one occurrence are found, the search terminates in that iteration.

With the common terms identified, a subset of these has to be selected for the subsequent codeword generation. This is the case, as terms might be overlapping (e.g. two different terms might contain the same element(s)) and, hence, only one may be used as a codeword. The objective is to find a subset of non-overlapping terms, that covers the maximum number of elements of the approximated matrix. A full search of all terms and the selection of the largest subset is generally infeasible. Therefore, embodiments resort to a suboptimal, greedy approach, selecting the largest and most often occurring terms first. The greedy search algorithm is specified as follows:

1. Start with an empty set of selected terms $S_s$. The set $S_g$ is initialized such that it contains all terms found by the search in the previous section.

2. Find the largest term (with respect to the number of elements) with the highest number of occurrences in $S_g$. If multiple terms meet that criterion choose one randomly.

3. If the term chosen in step 2 does not contain in any of its occurrences in any element an element of a term that is already contained in the set $S_s$, remove all occurrences of the term from the set $S_g$ and add all occurrences to the set $S_s$. Go to step 4. Else, remove all occurrences with an overlap to any term in $S_s$ from the set $S_g$ and go to step 2.

4. If $S_g$ is not empty, go to step 2, else the algorithm terminates.

The selected subset of terms $S_s$ is now used in the subsequent generation of the wiring matrices. The construction of the wiring matrices and, hence, the final decomposition into matrix factors follows the concept of the above described LZCC embodiment. The approximation of $\boldsymbol{W}_S$ is determined by

$$ W_S \approx F_{S,P} \, ... \, F_{S,1} F_{S,0} $$

with

$$ F_{S,0} = I $$

$F_{S,0}$ is the initial matrix factor and $F_{S,i}$ ($1 \leq i \leq P$ - 1) are the wiring matrices. The design of the latter, however, differs from the LZCC embodiment and is explained in the following in more detail. Further, $F_{S,P}$ is a projection matrix to select the appropriate codewords for the approximation and is generated as for the LZCC embodiment. As common codewords were identified in the pattern search and selection before, there are more degrees of freedom in the design of the wiring matrices as in accordance with embodiments one has not to resort to only creating one new codeword per wiring matrix/iteration as in the LZCC embodiment. The structure of the wiring matrices may thus be expanded into

$$ F_{s,i} = \begin{bmatrix} B \\ I \end{bmatrix} \qquad \forall i \in \{1, ..., P - 1\} $$

where $I$ is an identity matrix preserving all codewords created in the previous iterations $F_{s,i-1} \, ... F_{s,0}$. The size of $I$ is hence dependent on the number of rows of $F_{s,i-1} \, ... F_{s,0}$. The matrix B generates new codewords by linear combination of previously occurring codewords. Hence, the number of rows of B corresponds to the number of codewords generated in that iteration. If a minimum number of matrix factors is desirable, the first matrix factor $F_{s,1}$ creates all codewords consisting of terms with two elements, that were found and selected before. Subsequent matrix factors contain refinements to codebook, e.g. combinations of two element terms created before into larger codewords with more elements. Lastly, $F_{s,P-1}$ combines the codewords created before to construct the columns of $\boldsymbol{W}_s$. Further, any elements in $\boldsymbol{W}_s$ not addressed by the codewords created in previous steps are added by means of the initial codebook matrix. If desired, the structure may be adjusted to the specific needs of the hardware. For example if a given number of additions is desired wiring matrices may be created accordingly from the generated sub-expressions. The only limitation to this is that, clearly, some codewords rely on terms that need to be generated in advance.

Fig. 20 illustrates a table showing improvements of the inventive algorithm for convolutional neural networks over the state of the art ($C_{ST}$) as well as the improvement of the LZ version of the inventive method ($C_{LZ}$) over the standard version of the inventive method ($C_{DM}$). In the table, the number of additions per matrix entry for various matrix sizes and calculation methods is indicated. As described above, the matrix is cut into sub-matrices of optimized sizes, and the notations $m_i n_j$ (like $5_1 4_1$ in the 7th row of the table) means that $mi + nj$ columns are cut into $i$ blocks with m columns and $j$ blocks with n columns. The table indicates the results for different sizes of matrices provided by the respective kernel of a CNN. The results for $3 \times 3$, $5 \times 5$ and $7 \times 7$ kernels and various number of kernels are given. The second matrix dimension (number of columns) indicates the number of matrix elements per kernel which is either 9, 25 or 49, while the first matrix dimension (number of rows) indicates the number of kernels used in the CNN so that the overall input matrix provided to the inventive architecture for performing the matrix vector calculation as an overall size is dependent on the number and the size of the kernels.

The column $C_{ST}$ indicates the number of additions per matrix entry by conventional approaches, and the columns $C_{DM}$ and $C_{LZ}$ indicate the number of additions achieved when implementing the just described embodiments, namely the LZCC embodiment and the embodiment *"Lempel-Ziv inspired Computation Coding"*. In the column $C_{DM}$ and $C_{LZ}$, the last columns indicate the way the matrices have been split, for example $5_1 4_1$ indicates that one $49 \times 5$ and one $49 \times 4$ matrix are used yielding a total of the $49 \times 9$ size as indicated in the first column.

As may be seen from the table, the number of additions, when implementing the inventive approach, is significantly lower than the number required in conventional approaches illustrating the improvement in performance of the inventive approach over conventional approaches.

While embodiments of the present invention have been described above with reference to the use of respective CC-matrices having only two entries per row with respective values being represented as a power of two, it is noted that the present invention is not limited thereto. Rather, in accordance with other embodiments, entry-counts per row of a CC-matrix may vary. Stated differently, instead of fixing the structure of the CC-matrix to only allow for two entries per row, it is also possible to use more powers of two. With only one entry there is no addition needed while four, eight or more entries similar to the traditional approach require larger adder implementations. With a higher number of entries not only the number of adders per CC-matrix vector product increases but also the number of matrices required to decompose the original matrix decreases. This is a non-trivial trade-off. What is best in practice, may vary from application to application.

As described above with reference to the embodiment of Fig. 5 and Fig. 6, the architecture or structure according to such embodiments makes use of the fact that E is a constant which allows for an efficient implementation although the number of additions is not reduced. On the other hand, the above described embodiments, namely the LZCC embodiment and the embodiment *"Lempel-Ziv inspired Computation Coding utilizing common terms"* may use values of E that are not the same or constant in all rows but differ which, in turn results in a lower number of required additions which improves the overall process.

*General*

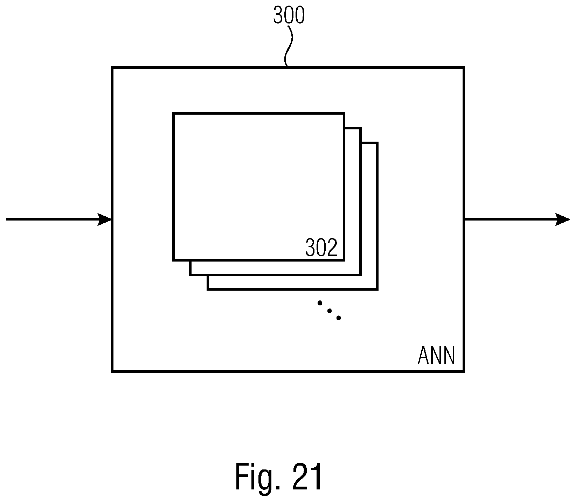

While embodiments of the present invention have been described above with reference to a multilayer perceptron, MLP, ANN, it is noted that the present invention is not limited thereto. Rather, in accordance with other embodiments, the inventive approach may also be applied to other kinds of neural networks, e.g., to convolutional neural networks, CNNs. Fig. 21 illustrates a schematic representation of an artificial neural network, ANN, 300 in which the above described inventive approach may be implemented. As is indicated in Fig. 21, the ANN 300 includes one or more layers 302, with each layer provided to calculate at least the above described vector product on the basis of a weight matrix W and an input vector *v*. In accordance with specific embodiments, the ANN 300 may be a convolutional neural network yielding a matrix W per respective layer. Each layer thereof using a plurality of kernels with each kernel providing a part of the matrix W, wherein the mention of the matrix is defined by the number of kernels and the size of the kernels.

Embodiments of the present invention have been described in detail above, and the respective embodiments and aspects may be implemented individually or two or more of the embodiments or aspects may be implemented in combination.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

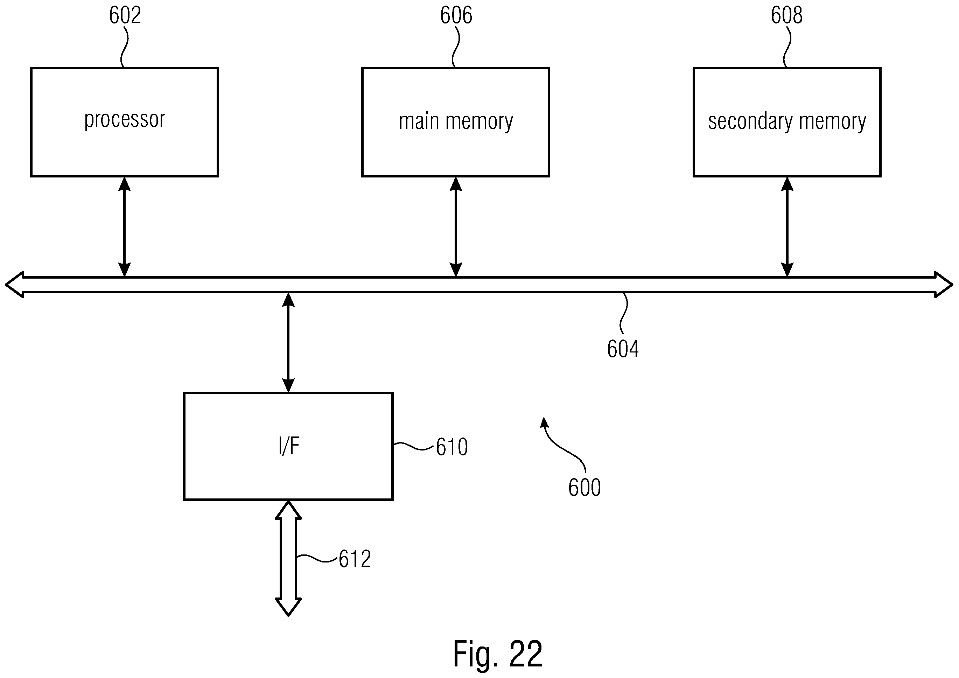

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 22 illustrates an example of a computer system 600. The units or modules as well as the steps of the methods performed by these units may execute on one or more computer systems 600. The computer system 600 includes one or more processors 602, like a special purpose or a general-purpose digital signal processor. The processor 602 may be a coprocessor build or programmed so as to implement the above described embodiments of the inventive matrix vector multiplication. The processor 602 is connected to a communication infrastructure 604, like a bus or a network. The computer system 600 includes a main memory 606, e.g., a random-access memory, RAM, and a secondary memory 608, e.g., a hard disk drive and/or a removable storage drive. The secondary memory 608 may allow computer programs or other instructions to be loaded into the computer system 600. The computer system 600 may further include a communications interface 610 to allow software and data to be transferred between computer system 600 and external devices. The communication may be in the from electronic, electromagnetic, optical, or other signals capable of being handled by a communications interface. The communication may use a wire or a cable, fiber optics, a phone line, a cellular phone link, an RF link and other communications channels 612.

The terms "computer program medium" and "computer readable medium" are used to generally refer to tangible storage media such as removable storage units or a hard disk installed in a hard disk drive. These computer program products are means for providing software to the computer system 600. The computer programs, also referred to as computer control logic, are stored in main memory 606 and/or secondary memory 608. Computer programs may also be received via the communications interface 610. The computer program, when executed, enables the computer system 600 to implement the present invention. In particular, the computer program, when executed, enables processor 602 to implement the processes of the present invention, such as any of the methods described herein. Accordingly, such a computer program may represent a controller of the computer system 600. Where the disclosure is implemented using software, the software may be stored in a computer program product and loaded into computer system 600 using a removable storage drive, an interface, like communications interface 610.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate or are capable of cooperating with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier or a digital storage medium, or a computer-readable medium comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device, for example a field programmable gate array, may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

## REFERENCES

[1] C. Szegedy, W. Liu, Y. Jia et al., "Going deeper with convolutions," in 2015 IEEE Conference on Computer Vision and Pattern Recognition (CVPR), 2015, pp. 1-9.

[2] J. Redmon, S. Divvala, R. Girshick, and A. Farhadi, "You only look once: Unified, real-time object detection," in 2016 IEEE Conference on Computer Vision and Pattern Recognition (CVPR), 2016, pp. 779-788.

[3] S. Ren, K. He, R. Girshick, and J. Sun, "Faster r-cnn: Towards real-time object detection with region proposal networks," IEEE Transactions on Pattern Analysis and Machine Intelligence, vol. 39, no. 6, pp. 1137-1149, 2017.

[4] K. Zhang, W. Zuo, Y. Chen et al., "Beyond a gaussian denoiser: Residual learning of deep cnn for image denoising," IEEE Transactions on Image Processing, vol. 26, no. 7, pp. 3142-3155, 2017.

[5] Y. Bengio, A. Courville, and P. Vincent, "Representation learning: A review and new perspectives," IEEE Transactions on Pattern Analysis and Machine Intelligence, vol. 35, no. 8, pp. 1798-1828, 2013.

[6] A. Graves, A.-r. Mohamed, and G. Hinton, "Speech recognition with deep recurrent neural networks," in 2013 IEEE International Conference on Acoustics, Speech and Signal Processing, 2013, pp. 6645-6649.

[7] O. Abdel-Hamid, A.-r. Mohamed, H. Jiang et al., "Convolutional neural networks for speech recognition," IEEE/ACM Transactions on Audio, Speech, and Language Processing, vol. 22, no. 10, pp. 1533-1545, 2014.

[8] P. Bangalore and L. B. Tjernberg, "An artificial neural network approach for early fault detection of gearbox bearings," IEEE Transactions on Smart Grid, vol. 6, no. 2, pp. 980-987, 2015.

[9] Y. Xu, Y. Sun, X. Liu, and Y. Zheng, "A digital-twin-assisted fault diagnosis using deep transfer learning," IEEE Access, vol. 7, pp. 19 990- 19 999, 2019.

[10] M. Blott, T. B. Preußer, N. J. Fraser et al., "FINN-R: An End-to-End Deep-Learning Framework for Fast Exploration of Quantized Neural Networks, "ACM Trans. Reconfigurable Technol. Syst., vol. 11, no. 3, Dec. 2018. [Online]. Available: https://doi.org/10.1145/3242897

[11] R. Müller, B. Gade, and A. Bereyhi, "Linear computation coding," in Proc. IEEE Int'l Conf. Acoustics, Speech, Sign. Proc. (ICASSP), Toronto, Canada, June 2021.

[12] -, "Efficient matrix multiplication: The sparse power-of-2 factorization," in Proc. of Information Theory & Applications Workshop, San Diego, CA, Feb. 2020, https://arxiv.org/abs/2002.04002v2.

[13] C. Latotzke and T. Gemmeke, "Efficiency Versus Accuracy: A Review of Design Techniques for DNN Hardware Accelerators," IEEE Access, vol. 9, pp. 9785-9799, 2021.

[14] H. T. Kung and C. E. Leiserson, "Systolic Arrays for (VLSI)," Carnegie- Mellon University Pittsburgh PA Dept. of Computer Science, Tech. Rep., 1978.

[15] N. P. Jouppi, C. Young, N. Patil et al., "In-Datacenter Performance Analysis of a Tensor Processing Unit," in Proceedings of the 44th Annual International Symposium on Computer Architecture, ser. ISCA '17. New York, NY, USA: Association for Computing Machinery, 2017, pp. 1-12. [Online]. Available: https://doi.org/10.1145/3079856.3080246

[16] L. Jia, L. Lu, X. Wei, and Y. Liang, "Generating Systolic Array Accelerators With Reusable Blocks," IEEE Micro, vol. 40, no. 4, pp. 85-92, 2020.

[17] L. D. Medus, T. Iakymchuk, J. V. Frances-Villora et al., "A Novel Systolic Parallel Hardware Architecture for the FPGA Acceleration of Feedforward Neural Networks," IEEE Access, vol. 7, pp. 76 084-76 103, 2019.

[18] S. Kala, B. R. Jose, J. Mathew, and S. Nalesh, "High-Performance CNN Accelerator on FPGA Using Unified Winograd-GEMM Architecture," IEEE Transactions on Very Large Scale Integration (VLSI) Systems, vol. 27, no. 12, pp. 2816-2828, 2019.

[19] S. Markidis, S. W. D. Chien, E. Laure et al., "NVIDIA Tensor Core Programmability, Performance amp; Precision," in 2018 IEEE International Parallel and Distributed Processing Symposium Workshops (IPDPSW), 2018, pp. 522-531.

[20] K. Rocki, D. Van Essendelft, I. Sharapov et al., "Fast Stencil-Code Computation on a Wafer-Scale Processor," in Proceedings of the International Conference for High Performance Computing, Networking, Storage and Analysis, ser. SC '20. IEEE Press, 2020.

[21] I. Bae, B. Harris, H. Min, and B. Egger, "Auto-Tuning CNNs for Coarse- Grained Reconfigurable Array-Based Accelerators," IEEE Transactions on Computer-Aided Design of Integrated Circuits and Systems, vol. 37, no. 11, pp. 2301-2310, 2018.

[22] E. Wang, J. J. Davis, P. Y. K. Cheung, and G. A. Constantinides, "LUTNet: Learning FPGA Configurations for Highly Efficient Neural Network Inference," IEEE Transactions on Computers, vol. 69, no. 12, pp. 1795-1808, 2020.

[23] H. Ye, X. Zhang, Z. Huang et al., "HybridDNN: A Framework for High- Performance Hybrid DNN Accelerator Design and Implementation," in 2020 57th ACM/IEEE Design Automation Conference (DAC), 2020, pp. 1-6.

[24] X. Zhang, J. Wang, C. Zhu et al., "DNNBuilder: an Automated Tool for Building High-Performance DNN Hardware Accelerators for FPGAs," in 2018 IEEE/ACM International Conference on Computer-Aided Design (ICCAD), 2018, pp. 1-8.

[25] A. Demidovskij and E. Smirnov, "Effective Post-Training Quantization Of Neural Networks For Inference on Low Power Neural Accelerator," in 2020 International Joint Conference on Neural Networks (IJCNN), 2020, pp. 1-7.

[26] A. Fan, P. Stock, et al., "Training with Quantization Noise for Extreme Model Compression," 2020.

[27] G. B. Hacene, V. Gripon, M. Arzel et al., "Quantized Guided Pruning for Efficient Hardware Implementations of Deep Neural Networks," in 2020 18th IEEE International New Circuits and Systems Conference (NEWCAS), 2020, pp. 206-209.

[28] S. Zhang, Z. Du, L. Zhang et al., "Cambricon-X: An accelerator for sparse neural networks," in 2016 49th Annual IEEE/ACM International Symposium on Microarchitecture (MICRO), 2016, pp. 1-12.

[29] T. Posewsky and D. Ziener, "A flexible fpga-based inference architecture for pruned deep neural networks," in Architecture of Computing Systems - ARCS 2018. Cham: Springer International Publishing, 2018, pp. 311-323.

[30] A. Ankit, I. E. Hajj, S. R. Chalamalasetti et al., "PUMA: A Programmable Ultra-Efficient Memristor-Based Accelerator for Machine Learning Inference," in Proceedings of the Twenty-Fourth International Conference on Architectural Support for Programming Languages and Operating Systems, ser. ASPLOS '19. New York, NY, USA: Association for Computing Machinery, 2019, pp. 715-731. [Online]. Available: https://doi.org/10.1145/3297858.3304049

[31] R. Mochida, K. Kouno, Y. Hayata et al., "A 4M Synapses integrated Analog ReRAM based 66.5 TOPS/W Neural-Network Processor with Cell Current Controlled Writing and Flexible Network Architecture," in 2018 IEEE Symposium on VLSI Technology, 2018, pp. 175-176.

[32] O. Krestinskaya and A. P. James, "Binary Weighted Memristive Analog Deep Neural Network for Near-Sensor Edge Processing," in 2018 IEEE 18th International Conference on Nanotechnology (IEEE-NANO), 2018, pp. 1-4.

[33] Y. Li, S. Kim, X. Sun et al., "Capacitor-based Cross-point Array for Analog Neural Network with Record Symmetry and Linearity," in 2018 IEEE Symposium on VLSI Technology, 2018, pp. 25-26.

[34] L. Fick, D. Blaauw, D. Sylvester et al., "Analog in-memory subthreshold deep neural network accelerator," in 2017 IEEE Custom Integrated Circuits Conference (CICC), 2017, pp. 1-4.

[35] E. Rosenthal, S. Greshnikov, D. Soudry, and S. Kvatinsky, "A fully analog memristor-based neural network with online gradient training," in 2016 IEEE International Symposium on Circuits and Systems (ISCAS), 2016, pp. 1394-1397.

[36] I. G. L.-I. für innovative Mikroelektronik, "IHP offers access to memristive technology for edge AI computing or hardware artificial neural networks applications," Jun 2021. [Online]. Available: https://www.ihp-microelectronics.com/de/news/news-detailansicht/ihp- offers-access-to-memristive-technology-for-edge-ai-computing-or-hardware-artificial-neural-networks-applications

[37] M. A. Nahmias, T. F. de Lima, A. N. Tait et al., "Photonic Multiply- Accumulate Operations for Neural Networks," IEEE Journal of Selected Topics in Quantum Electronics, vol. 26, no. 1, pp. 1-18, 2020.

[38] V. Bangari, B. A. Marquez, H. Miller et al., "Digital Electronics and Analog Photonics for Convolutional Neural Networks (DEAP-CNNs)," IEEE Journal of Selected Topics in Quantum Electronics, vol. 26, no. 1, pp. 1-13, 2020.

[39] A. Rahim, T. Spuesens, R. Baets, and W. Bogaerts, "Open-Access Silicon Photonics: Current Status and Emerging Initiatives," Proceedings of the IEEE, vol. 106, no. 12, pp. 2313-2330, 2018.

[40] V. Strassen, "Gaussian elimination is not optimal," Numerische Mathematik, vol. 13, pp. 354-356, 1969.

[41] A. D. Booth, "A signed binary multiplication technique," The Quarterly Journal of Mechanics and Applied Mathematics, vol. 4, no. 2, pp. 236- 240, Jan. 1951.

[42] J. E. Volder, "The CORDIC trigonometric computing technique," IRE Transactions on Electronic Computers, vol. EC-8, no. 3, pp. 330-334, Sep. 1959.

[43] E. Liberty and S. W. Zucker, "The mailman algorithm: A note on matrix- vector multiplication," Information Processing Letters, vol. 109, pp. 179- 182, Jan. 2009.

[44] S. G. Mallat and Z. Zhang, "Matching pursuit with time-frequency dictionaries," IEEE Transactions on Signal Processing, vol. 41, no. 12, pp. 3397-3415, 1993.

[45] M. Naumov, D. Mudigere, H. M. Shi et al., "Deep learning recommendation model for personalization and recommendation systems," CoRR, vol. abs/1906.00091, 2019. [Online]. Available: https://arxiv.org/abs/1906.00091

[46] A. Hosangadi, F. Fallah and R. Kastner, "Common subexpression elimination involving multiple variables linear dsp synthesis," in Proceedings. 15th IEEE International Conference on Application-Specific Systems, Architectures and Processors, 2004., 2004, pp. 202-212. doi: 10.1109/ASAP.2004.1342471.

**Claims**

1. An apparatus for computing a matrix vector product of a given matrix and an arbitrary vector,

   wherein the given matrix is represented by S submatrices, with S≥1, each submatrix representing a vertical slice of the given matrix, and each submatrix approximated by the product of P further matrices, with P≥1, wherein each further matrix is a sparse matrix and includes in each row a certain number of elements unequal to zero,

wherein the apparatus comprises S processing chains, wherein each processing chain is to receive the arbitrary vector and comprises P processing blocks, and

wherein each processing block is to multiply a block input vector and an associated further matrix by shifting the elements of the block input vector according to the values of the elements in the associated further matrix which are unequal to zero, and by combining the shifted elements of the block input vector to obtain respective elements of a block output vector.

2. The apparatus of claim 1, wherein

- some or all rows of the further matrix include a different number of elements unequal to zero, or
- each row each of the further matrix includes the same number E of elements unequal to zero, with $E \geq 1$.

3. The apparatus of claim 1 or 2, wherein

the given matrix is represented by $S > 1$ submatrices, and each submatrix is approximated by the product of $P > 1$ further sparse matrices, wherein each further sparse matrix includes the $E \geq 1$ elements unequal to zero in each row,

the apparatus comprises:

an input block to receive the arbitrary vector,
an output block to output the matrix vector product, and
$S > 1$ processing chains connected between the input block and the output block, each processing chain comprising $P > 1$ serially connected processing blocks, and
wherein the output block comprises a combiner for combining the outputs of the $S > 1$ processing chains to obtain the matrix vector product.

4. The apparatus of claim 2, wherein each processing chain is to receive only a part of the arbitrary vector, the part of the arbitrary vector corresponding to the vertical slice of the given matrix approximated by the processing chain.

5. The apparatus of any one claims 2 to 4, wherein a first processing block in each processing chain is to receive as the block input vector the arbitrary vector or the part of the arbitrary vector, and each of the second to $P^{th}$ processing blocks is to receive as the block input vector a block output vector of a preceding processing block.

6. The apparatus of any one of the preceding claims, wherein each of the processing blocks comprises:

an input to receive the block input vector,
a shifter device, wherein the shifter device is coupled to the input for receiving the block input vector, and wherein the shifter device is to perform respective shifting operations according to the non-zero matrix elements of the associated further matrix, and
a combiner device, wherein the combiner device is to combine outputs of the shifter device for obtaining the block output vector.

7. The apparatus of claim 6, wherein the shifter device comprises

- a plurality of hard-wired shifts so as to perform the respective shifting operations according to the non-zero matrix elements of the associated further matrix, or
- a configurable or programmable logic circuit, like a field-programmable gate array, FPGA, the array of programmable logic blocks being programmed so as to perform the respective shifting operations according to the non-zero matrix elements of the associated further matrix, or
- an integrated circuit, like an application specific integrated circuit, ASIC, the integrated circuit being implemented so as to perform the respective shifting operations according to the non-zero matrix elements of the associated further matrix.

8. The apparatus of claim 7, wherein the configurable or programmable logic circuit and/or the integrated circuit comprise:

one or more processing elements, the processing element comprising:

- one or more shifter modules, each shifter module receiving elements of the block input vector and respective non-zero entries of the given matrix, and causing the elements of the block input vector to be shifted according to the respective non-zero entries of the given matrix, and
- one or more adders, and

a memory for storing the respective block input vectors and the non-zero entries of the given matrix for the processing elements, wherein

- the memory is to provide the block input vector and the non-zero entries of the given matrix to each processing block at each processing cycle, or
- the memory comprises a plurality of memory elements, each memory element being associated with a processing element and storing the block input vector and the non-zero entries of the given matrix for the associated processing element.

9. The apparatus of any one of the preceding claims, wherein the number S of submatrices representing the input matrix, the number P of further matrices approximating each submatrix, and the number E of nonzero elements in each further matrix is determined according to a desired computational effort and accuracy of the calculation of the matrix vector product.

10. The apparatus of any one of the preceding claims, wherein one or more or all of the 2nd to Pth processing blocks are to receive the block input vector of the preceding processing block as an additional input.

11. The apparatus of claim 10, wherein one or more or all of the 1st to P-1th processing blocks are configured to include into the block output vector the block input vector.

12. The apparatus of any one of the preceding claims, wherein

the given matrix is provided by one layer of a convolutional neural network using a plurality of kernels, each kernel providing a part of the given matrix, and
a dimension of the given matrix is defined by a number of kernels and a size of the kernels.

13. An artificial neural network, ANN, comprising:

one or more layers, the layer to calculate at least the equation $a = Wv$,
wherein the layer comprises the apparatus of any one of the preceding claims with W being the given matrix, $v$ being the arbitrary vector, and $a$ being the matrix vector product provided by the apparatus.

14. The artificial neural network, ANN, of claim 13, wherein

the ANN is a convolutional neural network, CNN,
the given matrix is provided by one layer of the convolutional neural network using a plurality of kernels, each kernel providing a part of the given matrix, and
a dimension of the given matrix is defined by a number of kernels and a size of the kernels.

15. A computer-implemented method for computing a matrix vector product of a given matrix and an arbitrary vector,

wherein the input matrix is represented by S submatrices, with $S \geq 1$, each submatrix representing a vertical slice of the input matrix, and each submatrix approximated by the product of P further matrices, with $P \geq 1$, wherein each further matrix is a sparse matrix and includes in each row E a certain number of elements unequal to zero,
wherein the method comprises processing the arbitrary vector using S processing chains, each processing chain comprising P processing blocks,
wherein each processing block multiplies a block input vector and an associated further matrix by shifting the elements of the block input vector according to the values of the elements in the associated further matrix which are unequal to zero, and by combining the shifted elements of the block input vector to obtain respective elements of a block output vector.

16. A non-transitory computer program product comprising a computer readable medium storing instructions which, when executed on a computer, perform the method of claim 15.

$$W = \begin{pmatrix} 1.739 & 0.319 & \dots \\ \vdots & \vdots \\ 0.219 & 0.834 & \dots \end{pmatrix}$$

Fig. 1

Fig. 2

Fig. 3

Fig. 4

Fig. 5

Fig. 6

| dimension | W | S | P | CC LUTs | STD LUTs | I |
|---|---|---|---|---|---|---|
| 64 x 64 | 4 | 16 | 6 | 28817 | 115761 | 4.0x |
| 64 x 64 | 8 | 8 | 13 | 30926 | 115761 | 3.7x |
| 128 x 128 | 4 | 32 | 6 | 101568 | 421967 | 4.2x |
| 128 x 128 | 8 | 16 | 11 | 103092 | 421967 | 4.1x |
| 256 x 256 | 4 | 64 | 5 | 332576 | 1471861 | 4.4x |
| 256 x 256 | 8 | 32 | 10 | 357049 | 1471861 | 4.1x |

## Fig. 7

| 0-bits [%] | CC LUTS | STD LUTS | I |
|---|---|---|---|
| 0 | 9610 | 1162 | 0.12x |
| 10 | 19264 | 99386 | 5.16x |
| 20 | 19685 | 122111 | 6.20x |
| 30 | 22042 | 138747 | 6.29x |
| 40 | 25791 | 144411 | 5.60x |
| 50 | 26037 | 137953 | 5.30x |
| 60 | 23407 | 120656 | 5.15x |
| 70 | 21610 | 97193 | 4.50x |
| 80 | 16372 | 69998 | 4.28x |
| 90 | 11466 | 37389 | 3.26x |

## Fig. 8

matrix sparcity comparison

CC LUTs ①
STD LUTs ②

0-bit percentage

Fig. 9

EP 4 318 276 A1

Fig. 10

| pipeline steps | W | S | P | LUTs | FFs | MHz |
|:---:|:---:|:---:|:---:|:---:|:---:|:---:|
| 1 | 4 | 16 | 6 | 52431 | 1077 | 99 |
| 8 | 4 | 16 | 6 | 50294 | 32486 | 370 |
| 1 | 8 | 8 | 13 | 56383 | 1030 | 90 |
| 12 | 8 | 8 | 13 | 52796 | 31592 | 377 |

## Fig. 11

| layer | X | Y | S | P | CC-LUTs | STD-LUTs | I |
|:---:|:---:|:---:|:---:|:---:|:---:|:---:|:---:|
| bot 1 | 256 | 512 | 128 | 5 | 1052470 | 2029566 | 1.9x |
| bot 2 | 64 | 256 | 64 | 6 | 44769 | 277837 | 6.2x |
| bot 3 | 16 | 64 | 16 | 10 | 4872 | 24340 | 5.0x |
| top 1 | 256 | 512 | 128 | 5 | 527518 | 1806426 | 3.4x |

## Fig. 12

240

a
b

$> >$

c

Fig. 13(a)

242

a
b

$+$

c

Fig. 13(b)

244

x
a

>>

240₁

242

+ ──── y_i

240₂

x
a

>>

PE

## Fig. 14(a)

246

x
a

>>

240₁

250₁

x
a

>>

240₂

+

242

+ ──── y_i

x
a

>>

240₃

x
a

>>

+

240₄

250₂

PE

optional

## Fig. 14(b)

$$y = Ax, \quad A = \begin{pmatrix} a_{11} \ ....... \ a_{12} \ ....... \\ ... \ a_{21} \ ...... \ a_{22} \ ..... \\ a_{31} \ ............ \ a_{32} \ ... \\ \vdots \qquad\qquad \vdots \end{pmatrix}$$

two non-zero entities per row

Fig. 15(a)

Fig. 15(b)

244$_i$/ 246$_i$

252

a

x

PE

y$_i$

a

x

PE

y$_{i-1}$

244$_{i+1}$/ 246$_{i+1}$

Fig. 15(c)

252

244$_i$/ 246$_i$

S$_1$

a

x

PE

y$_i$

244$_{i+1}$/ 246$_{i+1}$

S$_2$

a

x

PE

y$_{i+1}$

S$_3$

a

x

PE

y$_{i+2}$

244$_{i+2}$/ 246$_{i+2}$

Fig. 15(d)

$$y = Ax$$

$(x_1, a_1)$
$(x_2, a_2)$
$(x_2, a_3)$

Fig. 16(a)

①: linear sequence of $x_j$
②: linear sequence of $a$

Fig. 16(b)

Fig. 16(c)

Fig. 16(d)

Fig. 16(e)

EP 4 318 276 A1

Fig. 17(a)

$$A = \begin{pmatrix} a_1 & a \dots a \dots \\ a_2 & a \dots a \dots \\ & \dots a \dots a \dots \\ & \dots \end{pmatrix}, \; x = \begin{pmatrix} x_1 \\ x_2 \\ \dots \\ x_n \end{pmatrix}$$

two non-zero entries per column

Fig. 17(b)

Fig. 17(c)

A₁X

A₁ ——→

X ——→

[Fig. 16 /
Fig. 17]

A₂

A₂Y₁

[Fig. 16 /
Fig. 17]

——→ Y₂ • • •

Y₁

## Fig. 18(a)

A₁, A₂, A₃ ...

X

[Fig. 16 /
Fig. 17]

Y

## Fig. 18(b)

$$A = \left( \begin{array}{c|c} A_1 & A_2 \\ \hline A_3 & A_4 \end{array} \right) \qquad X = \left( \begin{array}{c} X_1 \\ \hline X_2 \end{array} \right)$$

$$y = Ax, \; y = \left( \frac{Y_1}{Y_2} \right)$$

$$\left( \begin{array}{c} A_2 \\ X_2 \end{array} \right) \cdots \left( \begin{array}{c} A_1 \\ X_1 \end{array} \right)$$

sequence

Fig. 16 / Fig. 17

242

256

+

## Fig. 19

| | $C_{ST}$ | $C_{DM}$ | | $C_{LZ}$ | |
|---|---|---|---|---|---|
| 5 x 9 | 3.40 | $2.51 \pm 0.37$ | $3_1 2_1$ | $1.68 \pm 0.09$ | $3_1 2_1$ |
| 2 x 25 | 3.47 | $1.81 \pm 0.17$ | $2_1$ | $1.44 \pm 0.04$ | $2_1$ |
| 1 x 49 | 3.49 | $\infty$ | | $1.41 \pm 0.03$ | |
| 16 x 9 | 3.40 | $1.98 \pm 0.23$ | $3_3$ | $1.49 \pm 0.06$ | $3_3$ |
| 6 x 25 | 3.47 | $1.84 \pm 0.08$ | $3_2$ | $1.42 \pm 0.04$ | $3_2$ |
| 3 x 49 | 3.49 | $1.61 \pm 0.16$ | $3_1$ | $1.28 \pm 0.02$ | $3_1$ |
| 49 x 9 | 3.40 | $1.50 \pm 0.06$ | $5_1 4_1$ | $1.19 \pm 0.02$ | $3_3$ |
| 18 x 25 | 3.47 | $1.81 \pm 0.17$ | $2_9$ | $1.42 \pm 0.04$ | $3_6$ |
| 9 x 49 | 3.49 | $1.59 \pm 0.07$ | $5_1 4_1$ | $1.28 \pm 0.02$ | $3_3$ |
| 147 x 9 | 3.40 | $1.17 \pm 0.01$ | $5_1 4_1$ | $0.97 \pm 0.01$ | $5_1 4_1$ |
| 53 x 25 | 3.47 | $1.52 \pm 0.08$ | $5_5$ | $1.24 \pm 0.02$ | $3_7 4_1$ |
| 27 x 49 | 3.49 | $1.58 \pm 0.09$ | $5_5 2_1$ | $1.28 \pm 0.02$ | $3_9$ |
| 441 x 9 | 3.40 | $0.92 \pm 0.00$ | $9_1$ | $0.81 \pm 0.00$ | $9_1$ |
| 159 x 25 | 3.47 | $1.20 \pm 0.03$ | $6_3 7_1$ | $1.03 \pm 0.01$ | $4_5 5_1$ |
| 81 x 49 | 3.49 | $1.42 \pm 0.04$ | $6_7 7_1$ | $1.17 \pm 0.01$ | $4_{11} 5_1$ |

## Fig. 20

300

302

ANN

Fig. 21

Fig. 22

Europäisches
Patentamt

European
Patent Office

Office européen
des brevets

# EUROPEAN SEARCH REPORT

**Application Number**

**EP 22 18 5178**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MULLER RALF R ET AL: "Efficient Matrix Multiplication: The Sparse Power-of-2 Factorization", 2020 INFORMATION THEORY AND APPLICATIONS WORKSHOP (ITA), IEEE, 2 February 2020 (2020-02-02), pages 1-6, XP033852414, DOI: 10.1109/ITA50056.2020.9244952 [retrieved on 2020-10-29] sections I, II and IV; * abstract * ----- | 1-16 | INV. G06F17/16 G06N3/00 |
| A | STEFANIA PERRI ET AL: "Parallel architecture of power-of-two multipliers for FPGAs", IET CIRCUITS DEVICES AND SYSTEMS, THE INSTITUTION OF ENGINEERING AND TECHNOLOGY, GB, vol. 14, no. 3, 28 February 2020 (2020-02-28), pages 381-389, XP006095108, ISSN: 1751-858X, DOI: 10.1049/IET-CDS.2019.0246 sections 1-3; * abstract; figure 3 and 4 * ----- | 1-16 | |
| A | XIAOWEI XU ET AL: "Efficient hardware implementation of cellular neural networks with powers-of-two based incremental quantization", 20170717; 1077952576 - 1077952576, 17 July 2017 (2017-07-17), pages 1-10, XP058407107, DOI: 10.1145/3183584.3183611 ISBN: 978-1-4503-6442-3 * figures 4, 6 * ----- -/-- | 1-16 | TECHNICAL FIELDS SEARCHED (IPC) G06N G06F |

The present search report has been drawn up for all claims

| Place of search | Date of completion of the search | Examiner |
|---|---|---|
| Berlin | 5 January 2023 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 18 5178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 859 609 A1 (UNIV FRIEDRICH ALEXANDER ER [DE]) 4 August 2021 (2021-08-04) * paragraph [0010] – paragraph [0021] * ----- | 1-16 | |
| A | LIU ZHI-GANG ET AL: "Systolic Tensor Array: An Efficient Structured-Sparse GEMM Accelerator for Mobile CNN Inference", IEEE COMPUTER ARCHITECTURE LETTERS, IEEE, USA, vol. 19, no. 1, 12 March 2020 (2020-03-12) , pages 34-37, XP011783921, ISSN: 1556-6056, DOI: 10.1109/LCA.2020.2979965 [retrieved on 2020-04-16] * figure 1c * ----- | 1-16 | |

**TECHNICAL FIELDS SEARCHED (IPC)**

The present search report has been drawn up for all claims

| Place of search | Date of completion of the search | Examiner |
|---|---|---|
| Berlin | 5 January 2023 | Virnik, Elena |

EPO FORM 1503 03.82 (P04C01)

page 2 of 2

## ANNEX TO THE EUROPEAN SEARCH REPORT
## ON EUROPEAN PATENT APPLICATION NO.

EP 22 18 5178

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2023

| Patent document cited in search report | | Publication date | Patent family member(s) | | Publication date |
|---|---|---|---|---|---|
| EP 3859609 | A1 | 04-08-2021 | EP | 3859609 A1 | 04-08-2021 |
| | | | EP | 4097645 A1 | 07-12-2022 |
| | | | US | 2022374500 A1 | 24-11-2022 |
| | | | WO | 2021151980 A1 | 05-08-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. SZEGEDY ; W. LIU ; Y. JIA et al.** Going deeper with convolutions. *2015 IEEE Conference on Computer Vision and Pattern Recognition (CVPR),* 2015, 1-9
- **J. REDMON ; S. DIVVALA ; R. GIRSHICK ; A. FARHADI.** You only look once: Unified, real-time object detection. *2016 IEEE Conference on Computer Vision and Pattern Recognition (CVPR),* 2016, 779-788
- **S. REN ; K. HE ; R. GIRSHICK ; J. SUN.** Faster r-cnn: Towards real-time object detection with region proposal networks. *IEEE Transactions on Pattern Analysis and Machine Intelligence,* 2017, vol. 39 (6), 1137-1149
- **K. ZHANG ; W. ZUO ; Y. CHEN et al.** Beyond a gaussian denoiser: Residual learning of deep cnn for image denoising. *IEEE Transactions on Image Processing,* 2017, vol. 26 (7), 3142-3155
- **Y. BENGIO ; A. COURVILLE ; P. VINCENT.** Representation learning: A review and new perspectives. *IEEE Transactions on Pattern Analysis and Machine Intelligence,* 2013, vol. 35 (8), 1798-1828
- **A. GRAVES ; A.-R. MOHAMED ; G. HINTON.** Speech recognition with deep recurrent neural networks. *2013 IEEE International Conference on Acoustics, Speech and Signal Processing,* 2013, 6645-6649
- **O. ABDEL-HAMID ; A.-R. MOHAMED ; H. JIANG et al.** Convolutional neural networks for speech recognition. *IEEE/ACM Transactions on Audio, Speech, and Language Processing,* 2014, vol. 22 (10), 1533-1545
- **P. BANGALORE ; L. B. TJERNBERG.** An artificial neural network approach for early fault detection of gearbox bearings. *IEEE Transactions on Smart Grid,* 2015, vol. 6 (2), 980-987
- **Y. XU ; Y. SUN ; X. LIU ; Y. ZHENG.** A digital-twin-assisted fault diagnosis using deep transfer learning. *IEEE Access,* 2019, vol. 7, 19 990-19 999
- **M. BLOTT ; T. B. PREUßER ; N. J. FRASER et al.** FINN-R: An End-to-End Deep-Learning Framework for Fast Exploration of Quantized Neural Networks. *ACM Trans. Reconfigurable Technol. Syst.,* 03 December 2018, vol. 11, htps://doi.org/10.1145/3242897
- **R. MÜLLER ; B. GADE ; A. BEREYHI.** Linear computation coding. *Proc. IEEE Int'l Conf. Acoustics, Speech, Sign. Proc. (ICASSP), Toronto, Canada,* June 2021
- Efficient matrix multiplication: The sparse power-of-2 factorization. *Proc. of Information Theory & Applications Workshop, San Diego, CA,* February 2020, htps://arxiv.org/abs/2002.04002v2
- **C. LATOTZKE ; T. GEMMEKE.** Efficiency Versus Accuracy: A Review of Design Techniques for DNN Hardware Accelerators. *IEEE Access,* 2021, vol. 9, 9785-9799
- **H. T. KUNG ; C. E. LEISERSON.** Systolic Arrays for (VLSI). *Carnegie-Mellon University Pittsburgh PA Dept. of Computer Science, Tech. Rep.,* 1978
- In-Datacenter Performance Analysis of a Tensor Processing Unit. **N. P. JOUPPI ; C. YOUNG ; N. PATIL et al.** Proceedings of the 44th Annual International Symposium on Computer Architecture, ser. ISCA '17. Association for Computing Machinery, 2017, 1-12
- **L. JIA ; L. LU ; X. WEI ; Y. LIANG.** Generating Systolic Array Accelerators With Reusable Blocks. *IEEE Micro,* 2020, vol. 40 (4), 85-92
- **L. D. MEDUS ; T. LAKYMCHUK ; J. V. FRANCES-VILLORA et al.** A Novel Systolic Parallel Hardware Architecture for the FPGA Acceleration of Feedforward Neural Networks. *IEEE Access,* 2019, vol. 7, 76 084-76 103
- **S. KALA ; B. R. JOSE ; J. MATHEW ; S. NALESH.** High-Performance CNN Accelerator on FPGA Using Unified Winograd-GEMM Architecture. *IEEE Transactions on Very Large Scale Integration (VLSI) Systems,* 2019, vol. 27 (12), 2816-2828
- **S. MARKIDIS ; S. W. D. CHIEN ; E. LAURE et al.** NVIDIA Tensor Core Programmability, Performance amp; Precision. *2018 IEEE International Parallel and Distributed Processing Symposium Workshops (IPDPSW),* 2018, 522-531
- Fast Stencil-Code Computation on a Wafer-Scale Processor. **K. ROCKI ; D. VAN ESSENDELFT ; I. SHARAPOV et al.** Proceedings of the International Conference for High Performance Computing, Networking, Storage and Analysis, ser. SC '20. IEEE Press, 2020
- **I. BAE ; B. HARRIS ; H. MIN ; B. EGGER.** Auto-Tuning CNNs for Coarse-Grained Reconfigurable Array-Based Accelerators. *IEEE Transactions on Computer-Aided Design of Integrated Circuits and Systems,* 2018, vol. 37 (11), 2301-2310

- **E. WANG ; J. J. DAVIS ; P. Y. K. CHEUNG ; G. A. CONSTANTINIDES.** LUTNet: Learning FPGA Configurations for Highly Efficient Neural Network Inference. *IEEE Transactions on Computers,* 2020, vol. 69 (12), 1795-1808
- **H. YE ; X. ZHANG ; Z. HUANG et al.** HybridDNN: A Framework for High- Performance Hybrid DNN Accelerator Design and Implementation. *2020 57th ACM/IEEE Design Automation Conference (DAC),* 2020, 1-6
- **X. ZHANG ; J. WANG ; C. ZHU et al.** DNNBuilder: an Automated Tool for Building High-Performance DNN Hardware Accelerators for FPGAs. *2018 IEEE/ACM International Conference on Computer-Aided Design (ICCAD),* 2018, 1-8
- **A. DEMIDOVSKIJ ; E. SMIRNOV.** Effective Post-Training Quantization Of Neural Networks For Inference on Low Power Neural Accelerator. *2020 International Joint Conference on Neural Networks (IJCNN),* 2020, 1-7
- **A. FAN ; P. STOCK et al.** *Training with Quantization Noise for Extreme Model Compression,* 2020
- **G. B. HACENE ; V. GRIPON ; M. ARZEL et al.** Quantized Guided Pruning for Efficient Hardware Implementations of Deep Neural Networks. *2020 18th IEEE International New Circuits and Systems Conference (NEWCAS),* 2020, 206-209
- **S. ZHANG ; Z. DU ; L. ZHANG et al.** Cambricon-X: An accelerator for sparse neural networks. *2016 49th Annual IEEE/ACM International Symposium on Microarchitecture (MICRO),* 2016, 1-12
- A flexible fpga-based inference architecture for pruned deep neural networks. **T. POSEWSKY ; D. ZIENER.** Architecture of Computing Systems - ARCS 2018. Springer International Publishing, 2018, 311-323
- PUMA: A Programmable Ultra-Efficient Memristor-Based Accelerator for Machine Learning Inference. **A. ANKIT ; I. E. HAJJ ; S. R. CHALAMALA-SETTI et al.** Proceedings of the Twenty-Fourth International Conference on Architectural Support for Programming Languages and Operating Systems, ser. ASPLOS '19. Association for Computing Machinery, 2019, 715-731
- **R. MOCHIDA ; K. KOUNO ; Y. HAYATA et al.** A 4M Synapses integrated Analog ReRAM based 66.5 TOPS/W Neural-Network Processor with Cell Current Controlled Writing and Flexible Network Architecture. *2018 IEEE Symposium on VLSI Technology,* 2018, 175-176
- **O. KRESTINSKAYA ; A. P. JAMES.** Binary Weighted Memristive Analog Deep Neural Network for Near-Sensor Edge Processing. *2018 IEEE 18th International Conference on Nanotechnology (IEEE-NANO),* 2018, 1-4
- **Y. LI ; S. KIM ; X. SUN et al.** Capacitor-based Cross-point Array for Analog Neural Network with Record Symmetry and Linearity. *2018 IEEE Symposium on VLSI Technology,* 2018, 25-26
- **L. FICK ; D. BLAAUW ; D. SYLVESTER et al.** Analog in-memory subthreshold deep neural network accelerator. *2017 IEEE Custom Integrated Circuits Conference (CICC),* 2017, 1-4
- **E. ROSENTHAL ; S. GRESHNIKOV ; D. SOUDRY ; S. KVATINSKY.** A fully analog memristor-based neural network with online gradient training. *2016 IEEE International Symposium on Circuits and Systems (ISCAS),* 2016, 1394-1397
- **I. G. L.-I.** IHP offers access to memristive technology for edge AI computing or hardware artificial neural networks applications. *Mikroelektronik,* June 2021, https://www.ihp-microelectronics.com/de/news/news-detailansicht/ihp- offers-access-to-memristive-technology-for-edge-ai-computing-or-hardware-artificial-neural-networks-applications
- **M. A. NAHMIAS ; T. F. DE LIMA ; A. N. TAIT et al.** Photonic Multiply- Accumulate Operations for Neural Networks. *IEEE Journal of Selected Topics in Quantum Electronics,* 2020, vol. 26 (1), 1-18
- **V. BANGARI ; B. A. MARQUEZ ; H. MILLER et al.** Digital Electronics and Analog Photonics for Convolutional Neural Networks (DEAP-CNNs). *IEEE Journal of Selected Topics in Quantum Electronics,* 2020, vol. 26 (1), 1-13
- **A. RAHIM ; T. SPUESENS ; R. BAETS ; W. BOGAERTS.** Open-Access Silicon Photonics: Current Status and Emerging Initiatives. *Proceedings of the IEEE,* 2018, vol. 106 (12), 2313-2330
- **V. STRASSEN.** Gaussian elimination is not optimal. *Numerische Mathematik,* 1969, vol. 13, 354-356
- **A. D. BOOTH.** A signed binary multiplication technique. *The Quarterly Journal of Mechanics and Applied Mathematics,* January 1951, vol. 4 (2), 236-240
- **J. E. VOLDER.** The CORDIC trigonometric computing technique. *IRE Transactions on Electronic Computers,* September 1959, vol. EC-8 (3), 330-334
- **E. LIBERTY ; S. W. ZUCKER.** The mailman algorithm: A note on matrix- vector multiplication. *Information Processing Letters,* January 2009, vol. 109, 179-182
- **S. G. MALLAT ; Z. ZHANG.** Matching pursuit with time-frequency dictionaries. *IEEE Transactions on Signal Processing,* 1993, vol. 41 (12), 3397-3415
- **M. NAUMOV ; D. MUDIGERE ; H. M. SHI et al.** Deep learning recommendation model for personalization and recommendation systems. *CoRR,* 2019, https://arxiv.org/abs/1906.00091

- **A. HOSANGADI ; F. FALLAH ; R. KASTNER.** Common subexpression elimination involving multiple variables linear dsp synthesis. *Proceedings. 15th IEEE International Conference on Application-Specific Systems, Architectures and Processor,* 2004, 202-212